# EUROPEAN PATENT SPECIFICATION

(11) **EP 3 439 309 B1**
(45) Date of publication and mention of the grant of the patent: **09.12.2020**
(21) Application number: 17775815.8
(22) Date of filing: 29.03.2017
(51) Int. Cl.: H04N 21/235, H04N 21/2362, H04N 21/236, H04N 21/84

(54) **METHOD AND APPARATUS FOR TRANSMITTING AND RECEIVING BROADCAST SIGNALS**
VERFAHREN UND VORRICHTUNG ZUM SENDEN UND EMPFANGEN VON RUNDFUNKSIGNALEN
PROCÉDÉ ET APPAREIL D'ÉMISSION ET DE RÉCEPTION DE SIGNAUX DE DIFFUSION

(30) Priority: 30.03.2016 US 201662315649 P; 22.04.2016 US 201662326021 P
(43) Date of publication of application: 06.02.2019
(73) Proprietor: LG Electronics Inc., Seoul 07336 (KR)
(72) Inventor: HWANG, Soojin, Seoul 06772 (KR); SUH, Jongyeul, Seoul 06772 (KR)
(74) Representative: Frenkel, Matthias Alexander
(86) International application number: PCT/KR2017/003400
(87) International publication number: WO 2017/171391

(56) References cited:
- WO-A1-2015/152635
- WO-A1-2015/152635
- WO-A2-2013/015596
- KR-A- 20130 079 686
- KR-A- 20150 032 204
- KR-A- 20150 087 103
- US-A1- 2014 015 927
- "Digital Video Broadcasting (DVB); Specification for the use of Video and Audio Coding in Broadcasting Applications based on the MPEG-2 Transport Stream;Draft ETSI TS 101 154", ETSI DRAFT; DRAFT ETSI TS 101 154, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. Broadcast, no. V2.2.1, 7 May 2015 (2015-05-07), pages 1-237, XP014236829, [retrieved on 2015-05-07]
- RAFAL MANTIUK ET AL: "Backward compatible high dynamic range MPEG video compression", ACM TRANSACTIONS ON GRAPHICS,, vol. 25, no. 3, 1 July 2006 (2006-07-01), pages 713-723, XP058328167, ISSN: 0730-0301, DOI: 10.1145/1141911.1141946
- FAUTIER T: "UHD for broadcast and the DVB ultra HD-1 phase 2 standard", INTERNATIONAL BROADCASTING CONFERENCE 2016; 8 SEPTEMBER 2016 - 12 SEPTEMBER 2016; AMSTERDAM,, 8 September 2016 (2016-09-08), XP030082603, DOI: 10.1049/IBC.2016.0005
- Anonymous: "Phasing in Ultra High Definition", , 1 February 2017 (2017-02-01), pages 1-2, XP055601996, Retrieved from the Internet: URL:https://www.dvb.org/resources/public/f actsheets/dvb_-_phasing_in_uhd.pdf [retrieved on 2019-07-03]
- "Digital Video Broadcasting (DVB); Specification for Service Information (SI) in DVB systems", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.15.1, 1 December 2015 (2015-12-01), XP014265479,

## Description

### [Technical Field]

The present invention relates to an apparatus and method for transmitting and receiving a broadcast signal.

### [Background Art]

With the development of digital technology and communication technology, audio/video-based multimedia content has been increasingly distributed and requested in various fields, such as the Internet and personal media, as well as broadcasts and movies. In addition, consumers' demand for realistic media that provide a stereoscopic effect through broadcasts and movies has increased. Furthermore, as the size of TVs in homes is increased together with the development of display technology, consumers' demand for realistic content at a high quality of an HD (High Definition) or higher level is increasing. Realistic broadcasts through an UHDTV (Ultra High Definition TV) and a 3DTV have attracted considerable attention as a next-generation broadcast service. In particular, a UHD (Ultra High Definition) broadcast service has been increasingly discussed. An example is disclosed in document WO2015152635. In addition, attempts have been made to provide an HDR (High Dynamic Range) or HFR (High Frame Rate) support service for the UHD broadcast service. In order to identify the HDR or HFR support service, it is necessary for a broadcast reception apparatus to receive an identifier for an HDR or HFR broadcast component.

### [Disclosure]

### [Technical Problem]

It is an object of the present invention to improve transmission efficiency in a method and apparatus for transmitting a broadcast signal.

It is another object of the present invention to provide a transmission apparatus and method for providing information identifying an HDR or HFR service.

It is another object of the present invention to provide a transmission apparatus and method for receiving information identifying an HDR or HFR service and for providing the service to a user.

It is another object of the present invention to provide a transmission apparatus and method for providing information enabling the execution of video decoding in which the intention of a content producer is reflected.

It is a further object of the present invention to provide a transmission apparatus and method for executing video decoding in which the intention of a content producer is reflected.

### [Technical Solution]

A broadcast signal transmission method according to an embodiment of the present invention includes encoding UHD (Ultra High Definition) video data in HEVC (High Efficiency Video Coding) to generate an HEVC UHD video stream, generating a broadcast signal comprising the generated HEVC UHD video stream and service information (SI), the service information including a service description table (SDT), and transmitting the generated broadcast signal, wherein the SDT includes service type information, the service type information (service_type) indicating a UHD video service to which at least one of backward-compatible (BC) HDR (High Dynamic Range) or HFR (High Frame Rate) is applied or a UHD video service to which at least one of non-backward-compatible (NBC) HDR or HFR is applied.

The service type information (service_type) of the UHD video service to which the at least one of non-backward-compatible (NBC) HDR or HFR is applied may be set to 0x20.

The SDT may include a component descriptor, the component descriptor identifying a component stream of the UHD video service using a stream content field (stream_content), a stream content extension field (stream_content_ext), and a component type field (component_type), and a component stream of the UHD video service to which the at least one of backward-compatible (BC) HDR or HFR is applied may be identified by multiple component descriptors.

The component stream of the UHD video service to which the backward-compatible (BC) HFR is applied may be identified using a first component descriptor and a second component descriptor together, and the stream content field (stream_content), the stream content extension field (stream_content_ext), and the component type field (component_type) contained in the first component descriptor and the second component descriptor may be set to values of 0x9, 0x0, and 0x04 and values of 0xB, 0xF, and 0x05, respectively.

The component descriptor identifying the component stream of the UHD video service to which the at least one of non-backward-compatible (NBC) HDR or HFR is applied may be set to values different from the values of 0x9, 0x0, and 0x04, which are set for the first component descriptor, in terms of the stream content field (stream_content), the stream content extension field (stream_content_ext), and the component type field (component_type).

A broadcast signal transmission apparatus according to an embodiment of the present invention includes a broadcast signal transmission apparatus including a video encoder for encoding UHD (Ultra High Definition) video data in HEVC (High Efficiency Video Coding) to generate an HEVC UHD video stream, a multiplexer for generating a broadcast signal including the generated HEVC UHD video stream and service information (SI), the service information including a service description table (SDT), and a transmitter for transmitting the generated broadcast signal, wherein the SDT includes service type information, the service type information (service_type) indicating a UHD video service to which at least one of backward-compatible (BC) HDR (High Dynamic Range) or HFR (High Frame Rate) is applied or a UHD video service to which at least one of non-backward-compatible (NBC) HDR or HFR is applied.

The service type information (service_type) of the UHD video service to which the at least one of non-backward-compatible (NBC) HDR or HFR is applied may be set to 0x20.

The SDT may include a component descriptor, the component descriptor identifying a component stream of the UHD video service using a stream content field (stream_content), a stream content extension field (stream_content_ext), and a component type field (component_type), and a component stream of the UHD video service to which the at least one of backward-compatible (BC) HDR or HFR is applied may be identified by multiple component descriptors.

The component stream of the UHD video service to which the backward-compatible (BC) HFR is applied may be identified using a first component descriptor and a second component descriptor together, and the stream content field (stream_content), the stream content extension field (stream_content_ext), and the component type field (component_type) contained in the first component descriptor and the second component descriptor may be set to values of 0x9, 0x0, and 0x04 and values of 0xB, 0xF, and 0x05, respectively.

The component descriptor identifying the component stream of the UHD video service to which the at least one of non-backward-compatible (NBC) HDR or HFR is applied may be set to values different from the values of 0x9, 0x0, and 0x04, which are set for the first component descriptor, in terms of the stream content field (stream_content), the stream content extension field (stream_content_ext), and the component type field (component_type).

### [Advantageous Effects]

According to an embodiment of the present invention, it is possible to improve the transmission efficiency of a broadcasting system.

According to an embodiment of the present invention, a broadcast transmission apparatus is capable of providing service information identifying an HDR- or HFR-supporting broadcast service.

According to an embodiment of the present invention, the broadcast transmission apparatus is capable of providing a backward-compatible broadcast service.

According to an embodiment of the present invention, a broadcast reception apparatus is capable of identifying and displaying an HDR- or HFR-supporting broadcast service.

According to an embodiment of the present invention, the broadcast reception apparatus is capable of reproducing received broadcast content in consideration of the intention of a content producer.

### [Description of Drawings]

FIG. 1 is a view showing a method and apparatus for providing a UHD broadcast service according to an embodiment of the present invention;
FIG. 2 is a view showing a program map table (PMT) according to an embodiment of the present invention;
FIG. 3 shows an extension descriptor of program-specific information according to an embodiment of the present invention;
FIG. 4 shows an HEVC_HDR_WCG descriptor included in an extension descriptor according to an embodiment of the present invention;
FIG. 5 shows a service description table (SDT) included in service information (SI) according to an embodiment of the present invention;
FIG. 6 shows an event information table (EIT) included in service information (SI) according to an embodiment of the present invention;
FIG. 7 shows the identification number of a backward-compatible high-quality component defined by a component descriptor according to an embodiment of the present invention;
FIG. 8 shows the identification number of a non-backward-compatible high-quality component defined by a component descriptor according to an embodiment of the present invention;
FIG. 9 shows a method of transmitting multiple component descriptors according to an embodiment of the present invention;
FIG. 10 shows a method of extending a link type and a linkage type according to an embodiment of the present invention;
FIG. 11 shows the change of a table included in PSI or SI according to an embodiment of the present invention;
FIG. 12 is a block diagram showing a broadcast signal reception apparatus according to an embodiment of the present invention;
FIG. 13 is a view showing a process of doubling SFR video to generate HFR video in accordance with an embodiment of the present invention;
FIG. 14 shows a frame-rate-doubling method through interpolation according to an embodiment of the present invention;
FIG. 15 is a view showing a method of a transmission end transmitting SFR video and a reception end displaying the same as HFR video in accordance with an embodiment of the present invention;
FIG. 16 is a view showing the construction of a broadcast signal reception apparatus according to an embodiment of the present invention;
FIG. 17 is a view showing a broadcast signal transmission method according to an embodiment of the present invention; and
FIG. 18 is a view showing a broadcast signal reception method according to an embodiment of the present invention.

### [Best Mode]

With the provision of a UHD broadcast service, broadcasting technology for serving UHD video, which supports HDR (High Dynamic Range), WCG (Wide Color Gamut), and HFR (High Frame Rate) while having high resolution, is required. Each of HDR and HFR, which are used in a new UHD broadcast service, may be backward-compatible (BC) or non-backward-compatible (NBC), and information for identifying services supporting them is further required.

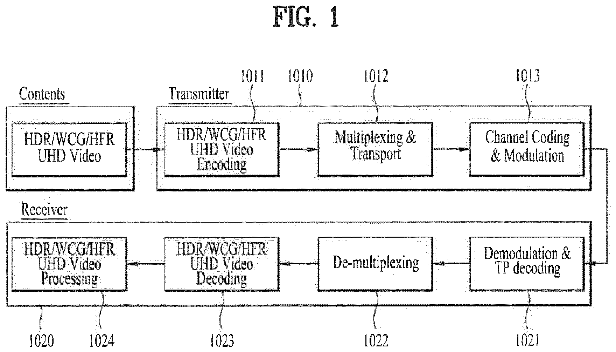

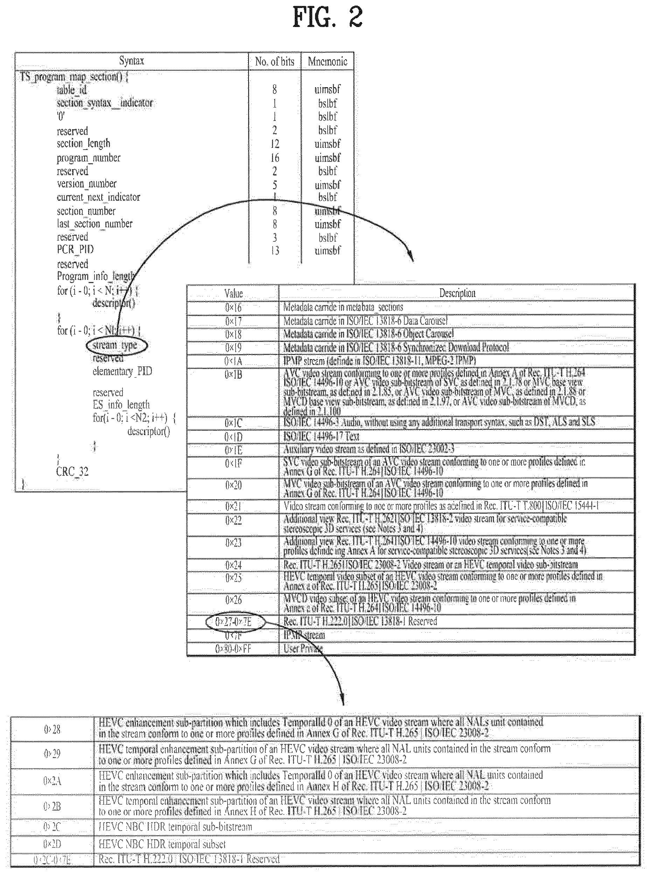

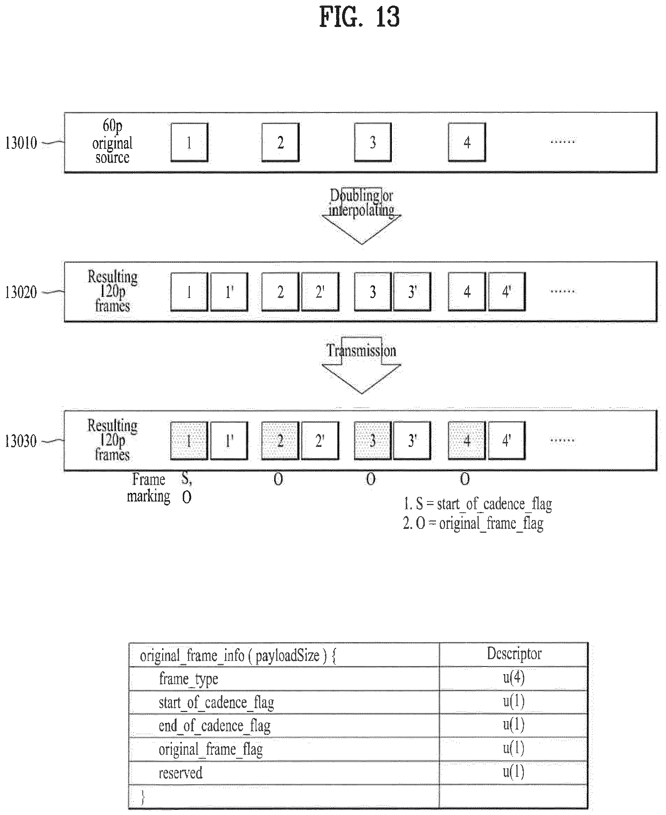

FIG. 1 is a view showing a method and apparatus for providing a UHD broadcast service according to an embodiment of the present invention. FIG. 1 is a diagram showing an end-to-end system including a transmission end and a reception end for a UHD broadcast service. A broadcast signal transmission apparatus (transmitter) 1010 may receive UHD video content supporting at least one of HDR, WCG, or HFR. The broadcast signal transmission apparatus may include at least one of a video encoder 1011, a multiplexer 1012, or a physical-layer transmitter 1013. The broadcast signal transmission apparatus may encode UHD video using the video encoder 1011. The encoded UHD video may include an SEI message, which will be described in detail with reference to FIGs. 13 to 16. The encoded UHD video may be multiplexed as a broadcast signal together with program-specific information (PSI) or service information (SI) by the multiplexer 1012. The service information may correspond to DVB-SI of a DVB system. The service information may include a service description table (SDT) and an event information table (EIT). The service description table may include a service descriptor including a service_type field. In addition, the service description table may include a component descriptor including stream_content, stream_content_ext, and component_type fields. These will be described in detail with reference to FIGs. 2 to 12. The broadcast signal transmission apparatus may channel-code and modulate the multiplexed broadcast signal through the physical-layer transmitter 1013, and may transmit the same to a broadcast signal reception apparatus (receiver) 1020.

The broadcast signal reception apparatus (receiver) 1020 may include at least one of a physical-layer receiver 1021, a demultiplexer 1022, a video decoder 1023, or a video processor 1024. The physical-layer receiver 1021 may receive and demodulate a broadcast signal, and may decode a transport packet (TP). The transport packet may be demultiplexed into UHD video and at least one of program-specific information (PSI) or service information (SI) by the demultiplexer. The service information may correspond to DVB-SI of a DVB system. The service information may include a service description table (SDT) and an event information table (EIT). The service description table may include a service descriptor including a service_type field. In addition, the service description table may include a component descriptor including stream_content, stream_content_ext, and component_type fields. These will be described in detail with reference to FIGs. 2 to 12. Here, the SI may include a component type indicating the service type to which the received UHD video corresponds and the type of HDR or HFR applied to the UHD video. The broadcast signal reception apparatus may acquire information about whether the UHD video can be decoded depending on the service type or the component type. This will be described later in detail. The video decoder 1023 may decode the UHD video, and the video processor 1024 may perform HDR, WCG, or HFR processing on the decoded UHD video, and may output the processed UHD video. The broadcast signal reception apparatus may extract an SEI message from the decoded UHD video, and the video processor 1024 may perform HFR processing based on the SEI message. These will be described in detail with reference to FIGs. 13 to 16.

FIG. 2 is a view showing a program map table (PMT) according to an embodiment of the present invention. Program-specific information (PSI) transmitted in the state of being multiplexed with UHD video may include a PMT. The PMT may identify and indicate the positions of streams constituting each service. Particularly, in connection with the present invention, the PMT may include stream type identifier (stream_type) information identifying the type of each stream. As shown, stream_type may identify different stream types depending on the value thereof. In the present invention, a new stream type is newly defined for a reserved value. That is, in the present invention, a new stream type may be assigned for an NBC HDR stream encoded in HEVC (High Efficiency Video Coding). For example, in the case in which stream_type has a first value, e.g. a value of 0x2C, the stream may indicate an HEVC NBC HDR temporal sub-stream. This may indicate that the stream is a sub-stream which is encoded in HEVC and to which non-backward-compatible HDR is applied. Here, in the case in which a sub-stream supports HFR, this may indicate that the sub-stream is a stream constituting a base. Also, in the case in which stream_type has a second value, e.g. a value of 0x2D, the stream may indicate an HEVC NBC HDR temporal subset. This may indicate that the stream is a subset which is encoded in HEVC and to which non-backward-compatible HDR is applied. Here, in the case in which a subset supports HFR, this may indicate that the subset is a stream added to a sub-stream constituting a base in order to support HFR. In the present invention, as described above, the type of stream identified by stream_type in a PMT is further defined such that the receiver can identify a UHD video stream that supports HDR or HFR. In some embodiments, in the case in which stream_type has a value of 0x2C, this may indicate an NBC HDR stream encoded in HEVC.

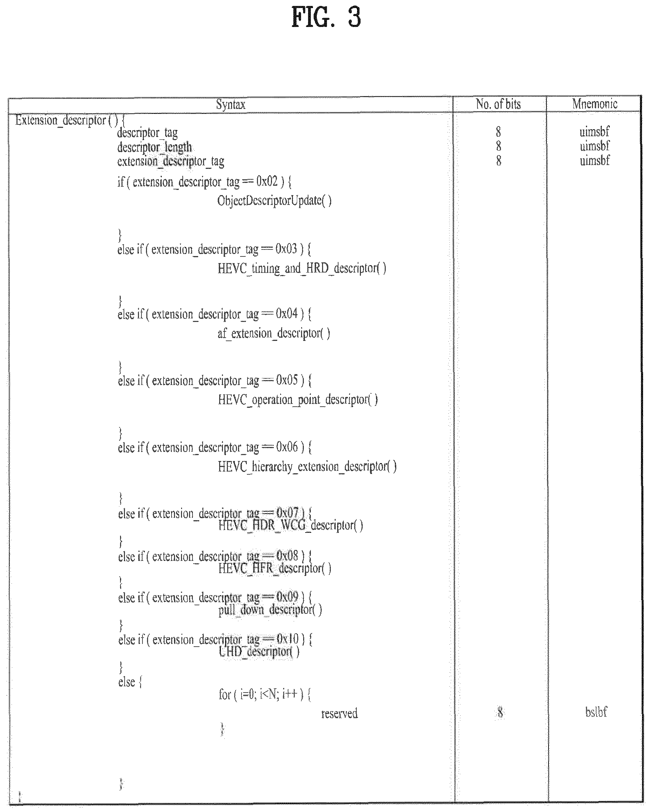

FIG. 3 shows an extension descriptor of program-specific information according to an embodiment of the present invention. Program-specific information (PSI) transmitted in the state of being multiplexed with a UHD video stream may include an extension descriptor (extension_descriptor). The extension descriptor may include an HDR- or HFR-related descriptor applied to the UHD video stream. The extension descriptor (extension_descriptor) is made to extend descriptor_tag in ISO/IEC 13818-1. That is, when descriptor_tag has a value of 63, program-specific information may include extension_descriptor. In the case in which an HDR and WCG stream is delivered, an HEVC_HDR_WCG descriptor having descriptor_tag of 63 and extension_descriptor_tag of 0x07 may be included in program-specific information (PSI). For an HFR stream, an HFR descriptor having descriptor_tag of 63 and extension_descriptor_tag of 0x08 may be included in program-specific information (PSI). For pull-down video, a pull-down descriptor having descriptor_tag of 63 and extension_descriptor_tag of 0x09 may be included in program-specific information (PSI). A UHD descriptor, which is set to have descriptor_tag of 63 and extension_descriptor_tag of 0x10, may be included in program-specific information (PSI). Depending on the circumstances, the details of the proposed HEVC HDR WCG descriptor and HEVC HFR descriptor may be extended so as to be included in an existing HEVC video descriptor. In addition, the above-mentioned descriptors may be included in a descriptor level of an SDT or an EIT of DVB SI. The relationship between individual descriptors in the above-mentioned extension descriptor and descriptor_tag may be changed depending on the intention of a designer. Hereinafter, detailed information included in each of the above-described descriptors will be described.

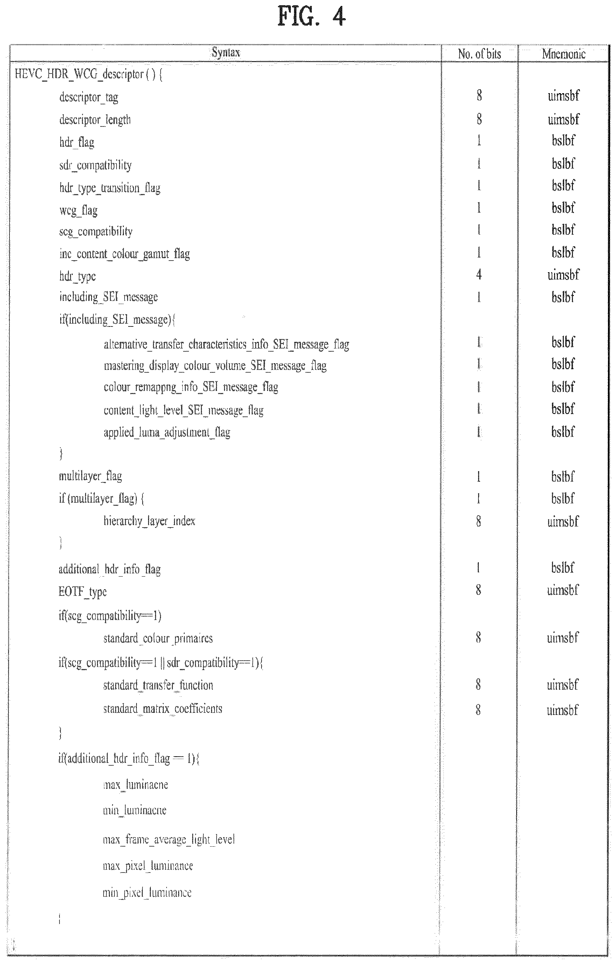

FIG. 4 shows an HEVC_HDR_WCG descriptor included in an extension descriptor according to an embodiment of the present invention. The HEVC_HDR_WCG descriptor may include HDR-and-WCG-related information applied to a service that is provided. The detailed information fields are as follows, and the HEVC_HDR_WCG descriptor may include at least one piece of the following information. An hdr_flag field may indicate whether the current service is a service including HDR video. In the case in which hdr_flag = 1, this may indicate that the current service includes HDR video. sdr_compatibility information may indicate whether HDR video constituting the current service is backward-compatible with SDR video. In the case in which sdr_compatibility is 1, this may indicate that HDR video is compatible with SDR video. hdr_type_transition_flag information is a flag indicating whether the HDR type is changed. In the case in which hdr_type_transition_flag is 1, the receiver may recognize that the HDR type is changed. Specifically, detailed information, such as the changed type, may be delivered through a video-level SEI message. In some embodiments, the detailed information may be signaled at the system level. Here, HDR type may be classified variously. For example, when HDR type is classified as a dual layer or a single layer, this may indicate information about whether the current HDR service needs a dual decoder or a single decoder. wcg_flag information indicates whether the current service is WCG-based video. In the case in which wcg_flag is 1, this may indicate that the current service is WCG-based video. When the current service includes a WCG-based video stream, scg_compatibility information indicates whether the video is compatible with a standard color gamut (e.g. BT.709). In the case in which scg_compatibility is 1, this may indicate that the existing color gamut and the wide color gamut are compatible with each other. inc_content_colour_gamut_flag information may indicate whether the current service separately signals information about the range of the color gamut represented by actual content. In the case in which inc_content_colour_gamut_flag is 1, information about the color gamut that is actually used for each piece of content, rather than the color gamut signaled at the time of transmission, may be further included in system-level signaling or video-level signaling. hdr_type information may indicate an HDR type. For example, 0x0 HLG (Hybrid Log Gamma), 0x1 Dolby single layer, 0x2 Dolby dual layer, 0x3 ST2084(PQ) + optional SEI message, 0x4 Technicolor Prime single, and 0x5 SHVC + optional metadata may be provided. Backward compatibility or non-backward compatibility may be determined depending on the HDR type. including_SEI_message information may determine whether the service is an HDR service or another type of HDR depending on whether metadata for an HDR service are included, as in the existing case, in which whether the service can be provided as 3D is determined depending on whether a frame-packing arrangement SEI message is included in a PMT. In addition, including_SEI_message information may list up a necessary SEI message. mastering_display_colour_volume_SEI_message_flag information may signal whether video of the service includes a mastering_display_colour_volume SEI message. alternative_transfer_characteristics_info_SEI_message_flag information, colour_remapping_info_SEI_message_flag information, and content_light_level_SEI_message_flag information may signal whether HDR video includes the SEI message defined in HEVC, in the same manner as mastering_display_colour_volume_SEI_message_flag. applied_luma_adjustment_flag information may indicate whether preprocessing is applied to HDR. multilayer_flag information may indicate whether HDR is of a multi-layer type. For example, this may indicate whether Dolby-dual-layer-type or SHVC-based-type HDR is used. hierarchy_layer_index information may indicate the index of the current layer, and may enable another layer forming a pair to be found. EOTF_type information may concretely include the EOTF type applied to HDR video. That is, this information may have the same value as transfer_characteristics included in VUI of HEVC. Here, the receiver may recognize which HDR resolution is applied to the video through EOTF_type and a flag related to whether an SEI message is included without the hdr_type field. In the case in which scg_compatibility is 1, standard_colour_primaires information provides detailed information about which colour primary and compatibility are actually provided. In the case in which sdr_compatibility is 1, standard_transfer_function and standard_matrix_coefficients information provides detailed information, such as transfer function and matrix coefficients, about which SDR and compatibility are actually provided. additional_hdr_info_flag information may be a flag indicating whether additional information related to HDR is included. max_luminance information is a non-negative integer indicating the peak luminance of a mastering display. The max_luminance information may have a value from 100 to 10000. min_luminance information is a non-negative fractional value indicating the minimum luminance of the mastering display. The min_luminance information may have a value from 0 to 0.10. max_frame_average_light_level information is a non-negative integer indicating the average in the peak luminance of the frames of all video streams. max_pixel_luminance information is a non-negative integer indicating the luminance of the brightest pixel in all video streams. min_pixel_luminance information is a non-negative integer indicating the luminance of the darkest pixel in all video streams. As described above, the HEVC_HDR_WCG descriptor includes HDR-and-WCG-related information applied to a video stream, whereby information related to the video stream may be delivered to the broadcast signal reception apparatus.

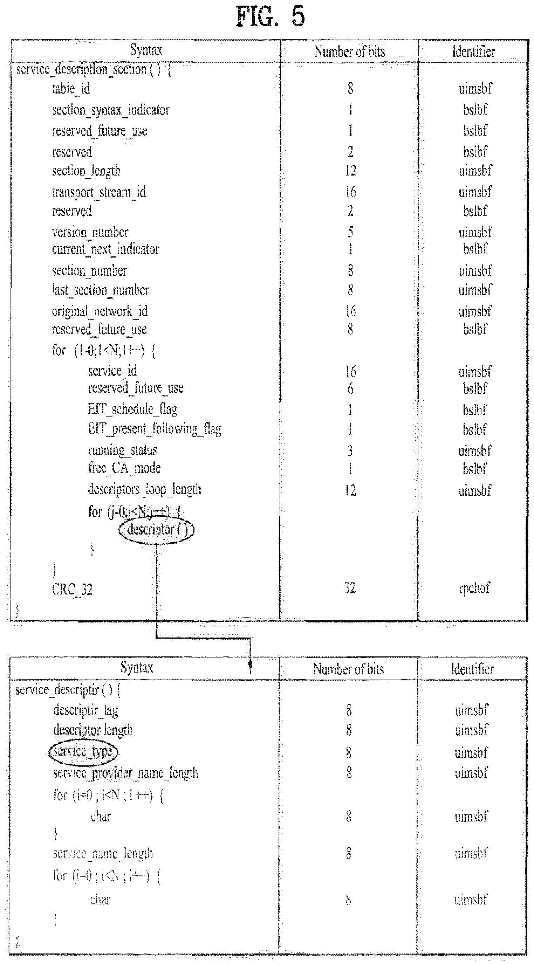

FIG. 5 shows a service description table (SDT) included in service information (SI) according to an embodiment of the present invention. A broadcast signal may include SI together with a UHD video stream. SI may include an SDT including description information about each service. The broadcast signal transmission apparatus may signal the service type of the service (channel) using a service_type field in a service descriptor included in the SDT. The present invention may newly define the value of the service_type field in order to signal that an NBC HDR service, an NBC HFR service, or an NBC HDR & HFR service (UHD-1 phase 2) is provided. That is, the value of the service_type field newly defined by the present invention may be applied to the case in which the service (channel) defines HEVC NBC HDR video, HEVC NBC HFR video, or HEVC NBC HDR & HFR video. In the case in which an NBC HDR service, an NBC HFR service, or an NBC HDR & HFR service is provided, the present invention may set the value of service_type of the service to 0x20. That is, in the present invention, the value of service_type for a UHD-1 phase 2 broadcast service including HDR and HFR may be set to 0x20. In the case in which service_type is defined as described above, service_type 0x1F may be applied to BC HDR/HFR services of UHD-1 phase 1 and UHD-1 phase 2, which are HEVC digital television services. Specifically, service_type 0x1F may signal a service to which BC HDR & BC HFR are applied, a service to which only BC HDR is applied, and a service to which only BC HFR is applied. For example, in the case in which NBC HDR or NBC HFR is applied together with BC HDR or BC HFR, 0x20, rather than 0x1F, may be signaled as service_type.

In some embodiments, services matched with the value of service_type may be defined as follows. In the service type is classified into CPA (conformance point A) and CPB (conformance point B), 0x20 may identify a CPA service (NBC HDR) of UHD-1 phase 2 using HEVC, and 0x21 may identify a CPB service (NBC HFR) of UHD-1 phase 2 using HEVC. Also, in the case in which service type is classified as a combination of CPA (conformance point A) and CPB (conformance point B), 0x22 may identify a CPA + CPB service (NBC HDR + NBC HFR) of UHD-1 phase 2 using HEVC. As described above, service type information included in the SDT of the present invention may identify that HEVC NBC HDR video, HEVC NBC HFR video, or HEVC NBC HDR & HFR video is served using the newly defined 0x20 value.

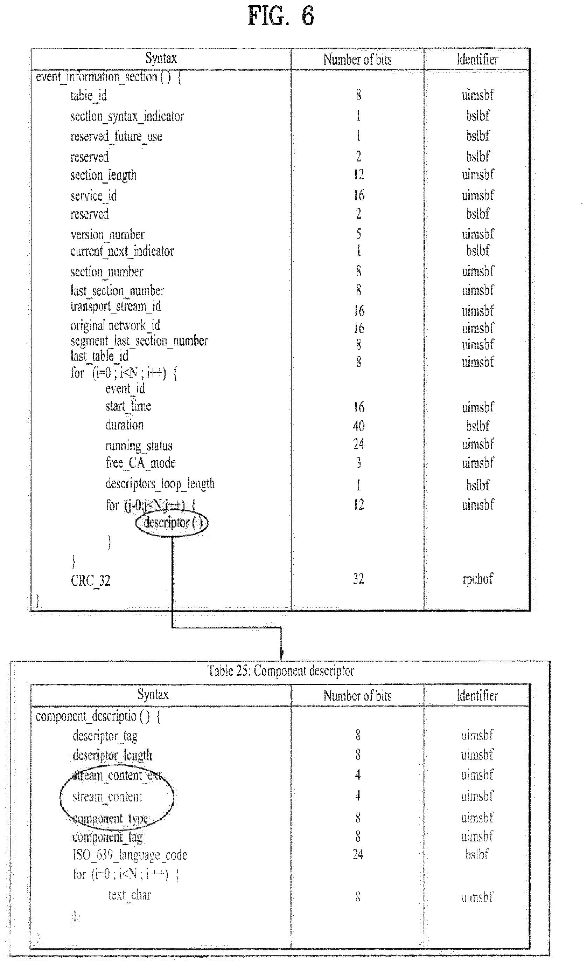

FIG. 6 shows an event information table (EIT) included in service information (SI) according to an embodiment of the present invention. A broadcast signal may include SI together with a UHD video stream. SI may include an EIT including description information about each event. The broadcast signal transmission apparatus may signal information identifying whether the type of a component included in an event is UHD HDR or HFR using stream_content, stream_content_ext, and component_type fields in a component descriptor included in an EIT. The component descriptor is located in a descriptor loop of an EIT or an SDT in order to indicate the features of video and audio streams included in the event. The broadcast signal reception apparatus may determine whether the event can be decoded using a component descriptor(s). Consequently, component-related information must be newly defined for a HEVC video stream to which HDR or HFR of the present invention is applied. The component descriptor may use stream_content, stream_content_ext, and component_type together in order to identify each component. That is, the component descriptor proposed by the present invention may signal information about the features of a UHD video stream using the stream_content, stream_content_ext, and component_type fields. In other words, the component descriptor proposed by the present invention may recognize the codec type of a video stream included in the event or service and the video features for a high-quality element, such as HDR/WCG/HFR, using stream_content, stream_content_ext, and component_type fields. For example, defined existing HEVC ultra-high-definition video of stream_content 0x9, stream_content_ext 0x0, and component_type 0x04 may be defined as a component type for UHD-1 phase 1. That is, a component in which the values of stream_content, stream_content_ext, and component_type fields are 0x9, 0x0, and 0x04 may be defined as the HEVC UHD 50/60p video (standard frame rate, SFR). The component newly defined by the present invention will be described with reference to the following figure.

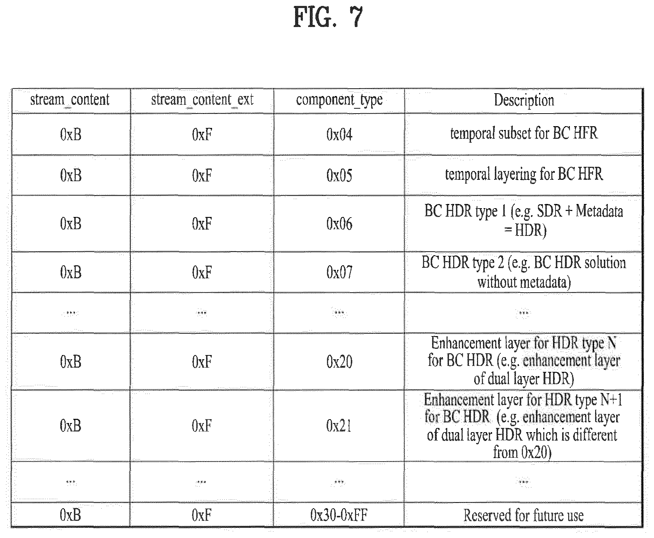

FIG. 7 shows the identification number of a backward-compatible high-quality component defined by a component descriptor according to an embodiment of the present invention. The backward-compatible high-quality component may be a BC (backward-compatible) HDR or BC HFR component. In the case in which stream_content included in the component descriptor is 0xB, as shown, a backward-compatible HFR, HDR, or WCG component may be identified. An example of signaling a backward-compatible component is as follows. In the case in which stream_content, stream_content_ext, and component_type fields of the component descriptor for a backward-compatible component are respectively set to values of 0x9, 0x0, and 0x04 included in the existing component type, it may be signaled that the component is HEVC UHD video. The present invention may further include an additional component descriptor in order to signal that the component is a backward-compatible UHD HDR or UHD HFR component. That is, a component descriptor having values of 0x9, 0x0, and 0x04 and an additional component descriptor may be signaled together for a single UHD video component in order to signal whether the component is a BC HDR HEVC UHD video component or a BC HFR HEVC UHD video component. That is, two or more component descriptors for a single component may be transmitted to an EIT or an SDT.

The values of stream_content, stream_content_ext, and component_type of the additional component descriptor may be defined as shown. For example, in the case in which the values of stream_content, stream_content_ext, and component_type of the additional component descriptor are respectively set to 0xB, 0xF, and 0x05, it may be indicated that the component is a video component for BC HFR. In a similar manner, it may be indicated that the video component is a video component for BC HDR depending on the set values of stream_content, stream_content_ext, and component_type of the additional component descriptor.

In other words, when a first component descriptor is set to 0x9, 0x0, and 0x04 for a single component, it may be signaled that the component is an HEVC UHD video component. When a second component descriptor is set to 0xB, 0xF, and 0x05, it may be signaled that the component is a video component for BC HFR. That is, the broadcast signal reception apparatus may recognize that the component is a BC HFR HEVC UHD video component in consideration of the first component descriptor and the second component descriptor together. Hereinafter, an example of analyzing a component descriptor depending on the type of broadcast signal reception apparatus will be described.

In the case in which a first component descriptor is set to 0x9, 0x0, and 0x04 and a second component descriptor is set to 0xB, 0xF, and 0x05 for a specific component, an SFR (Standard Frame Rate) receiver may analyze the first component descriptor, may recognize that the component is HEVC UHD video content, and may display video at 60 Hz of SFR. In this case, the SFR receiver may not separately analyze the second component descriptor. Under the same conditions, an HFR receiver may analyze both the first component descriptor and the second component descriptor, may recognize that the component is a BC HFR HEVC UHD video component, and may display video at HFR. In some embodiments, in the case in which component_type is set to 0x08, signaling related to WCG (BT.2020, etc.) may be included. The relationship between the values of stream_content, stream_content_ext, and component_type in the component descriptor mentioned above and the type of UHD video meant thereby may be changed depending on the intention of a designer.

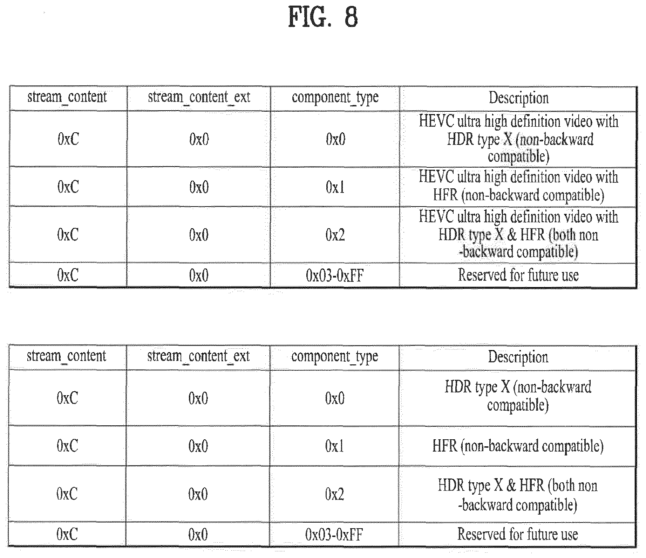

FIG. 8 shows the identification number of a non-backward-compatible high-quality component defined by a component descriptor according to an embodiment of the present invention. The non-backward-compatible high-quality component may be an NBC (non-backward-compatible) HDR or NBC HFR component. As shown in the upper end of the figure, the component descriptor of the present invention may newly define the values of stream_content, stream_content_ext, and component_type for an NBC HDR HEVC UHD video component, an NBC HFR HEVC UHD video component, or an NBC HDR & HFR HEVC UHD video component. That is, the component descriptor of the present invention may newly define a combination of the values of stream_content, stream_content_ext, and component_type in order to signal that the video component is an NBC HDR HEVC UHD video component, an NBC HFR HEVC UHD video component, or an NBC HDR & HFR HEVC UHD video component.

That is, the defined existing component_type may be ignored for an NBC HDR, NBC HFR, or NBC HDR & HFR component, and a component of the current event may be signaled using only component_type proposed by the present invention. That is, unlike the above-described BC HDR or BC HFR, it may be signaled that the video component is an NBC HDR HEVC UHD video component, an NBC HFR HEVC UHD video component, and an NBC HDR & HFR HEVC UHD video component using a combination of stream_content, stream_content_ext, and component_type included in a single component descriptor. The component descriptor may also signal the concrete type of HDR, as shown.

In some embodiments, it may be signaled only that the HDR is non-backward-compatible HDR without mentioning a concrete type, rather than including signaling about the HDR type. In addition, it may also be signaled only that the HFR is non-backward-compatible HFR.

In some embodiments, as shown in the lower end of the figure, a component descriptor may signal that the video is HEVC UHD video using the values of 0x9, 0x0, and 0x04 included in the existing component type, and an additional component descriptor may include the component type for NBC HFR, HDR, and WCG. That is, the component descriptor may signal that the video is HEVC UHD video using the values of 0x9, 0x0, and 0x04, and may signal that the video component is an NBC HDR HEVC UHD video component through NBC HDR type X using the values of 0xC, 0x0, and 0x0, which are additional component types.

In some embodiment, signaling related to WCG (BT.2020, etc.) may be included in component_type 0x03, in the same manner as above. The relationship between the values of stream_content, stream_content_ext, and component_type in the component descriptor mentioned above and the type of UHD video meant thereby may be changed depending on the intention of a designer.

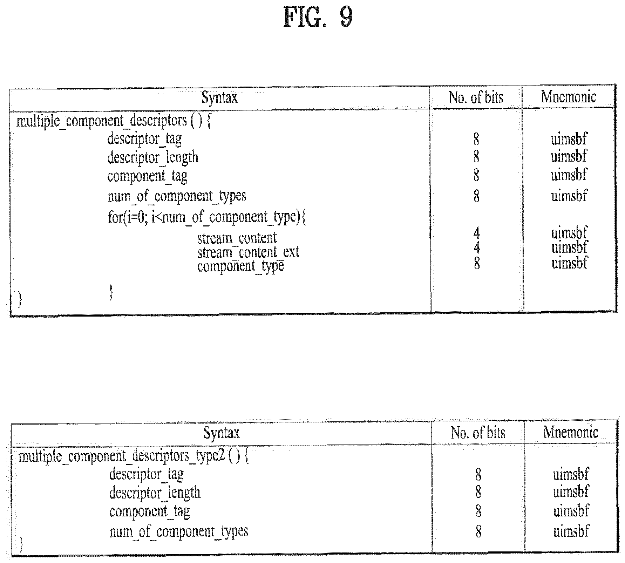

FIG. 9 shows a method of transmitting multiple component descriptors according to an embodiment of the present invention. Component descriptors capable of indicating several component_type for one component_tag may be defined instead of an existing component descriptor. These may be defined as multiple component descriptors. As shown in the upper end of the figure, the multiple component descriptors may include the following fields.

A component_tag field is an 8-bit field having the same value as the value of a component_tag field included in a stream identification descriptor for a component stream. A num_of_component_types field indicates the number of component types for signaling multiple component descriptors used for a backward-compatible component. A stream_content_ext field is a 4-bit field combined with a stream_content field in order to define the type of a stream. The stream_content field is a 4-bit field combined with the stream_content_ext field in order to define the type of a stream. A component_type field is an 8-bit field defining the type of a component. Multiple component descriptors may repeat a loop including stream_content, stream_content_ext, and component_type in proportion to the size of the num_of_component_types field in order to signal multiple component_type in the multiple component descriptors.

In some embodiments, as shown in the lower end of the figure, multiple_component_descriptors_type2 may be further signaled, in addition to an existing component descriptor. multiple_component_descriptors_type2 may be signaled while including only information about the number of component descriptors that are necessary. This may be signaled through a num_of_component_types field included in multiple_component_descriptors_type2, and the definition of the field was described previously.

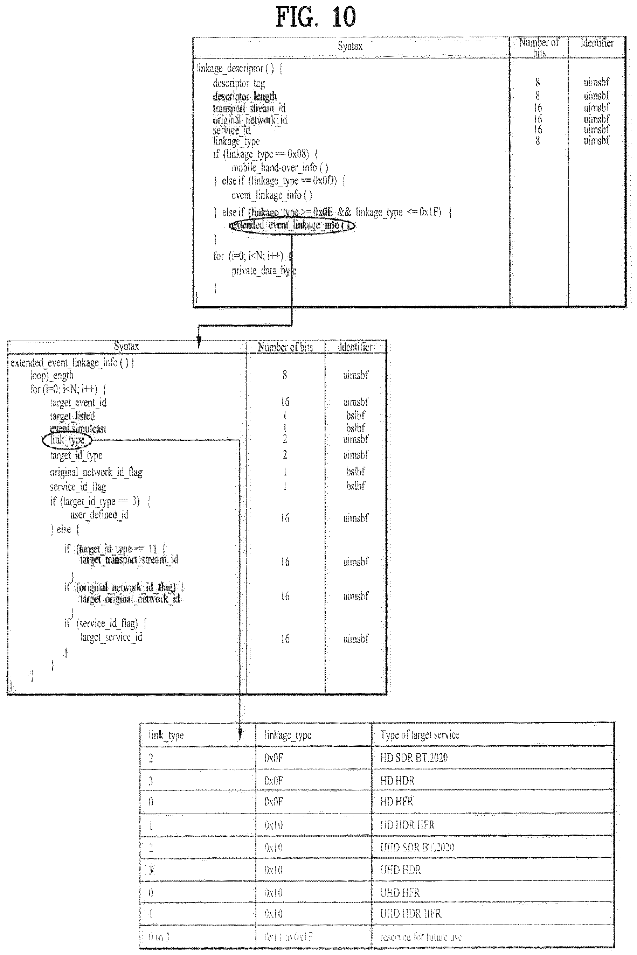

FIG. 10 shows a method of extending a link type and a linkage type according to an embodiment of the present invention. SI according to the present invention may include linkage_descriptor(). As shown, linkage_descriptor() may include a linkage_type field and extended_event_linkage_info(), and extended_event_linkage_info() may include a link_type field. When an existing UHD service not including HDR or HFR and a UHD service including HDR or HFR are served in accordance with the present invention, SI may newly define linkage_type and link_type in order to inform a user that another high-quality service exists.

In the case in which the broadcast signal reception apparatus is receiving a UHD broadcast, the broadcast signal transmission apparatus may signal that UHD HDR having linkage_type of 0x10 and link_type of 1 is served through linkage_descriptor(). The broadcast signal reception apparatus may recommend a user to select a high-quality UHD HDR service. At this time, an HDR or HFR service may correspond to a stream in the case in which the service is non-backward-compatible. In addition, linkage_type and link_type may be extended depending on whether WCG is included. SDR may be classified into BT.709-based SDR and BT.2020-based SDR. In the case in which BT.709 and BT.2020 are distinguished from each other, link_type shown in the figure may be extended. That is, an existing HD having linkage_type of 0x0E and link_type of 1 may be existing SDR, BT.709-based, and SFR. UHD having linkage_type of 0x0F and link_type of 0 may be classified depending on whether it is based on BT.709 or BT.2020. That is, in the case in which linkage_type is 0x10F and link_type is 2, as shown, it may be signaled that a UHD SDR BT.2020 service is being provided. The relationship between the values of linkage_type and link_type in linkage_descriptor() mentioned above and the type of UHD and HD video meant thereby may be changed depending on the intention of a designer.

A PSI/SI/PSIP processor of the broadcast signal reception apparatus that outputs an HD or UHD event having no high-quality element may parse a linkage descriptor for the event in the case in which the linkage descriptor exists. This may correspond to the case in which NBC HDR or NBC HFR is provided as a separate service. The PSI/SI/PSIP processor may parse extended_event_linkage_info() for detailed information analysis through the value of linkage_type. The PSI/SI/PSIP processor may simply recognize information about a target service linked based on extended_event_linkage_info() and link_type, and may recognize detailed information using component type of component_descriptor. In addition, the processor recognizes information enabling the reception of the target service based on link_type. Using the above information, the broadcast signal reception apparatus informs the user that a high-quality service corresponding to an event that the user is watching can be separately provided. In the case in which the user has an intention to receive a high-quality broadcast service (HDR/HFR HEVC UHD service), the high-quality broadcast service may be received using information enabling the reception of a stream of the target service.

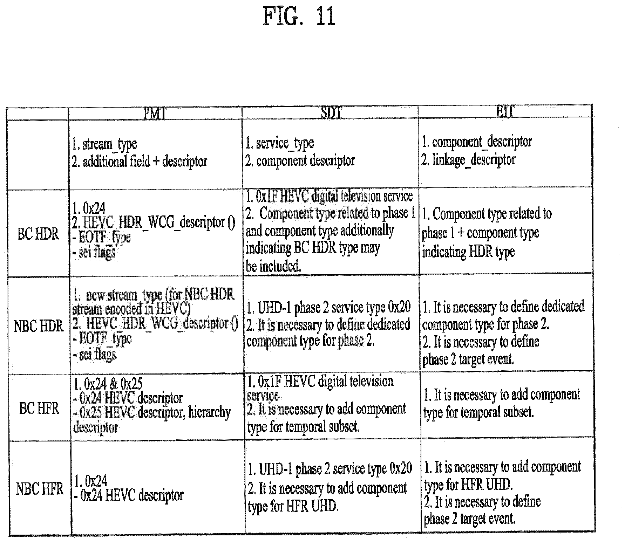

FIG. 11 shows the change of a table included in PSI or SI according to an embodiment of the present invention. For signaling proposed by the present invention, some fields and descriptors of a table included in PSI or SI may be changed.

For a PMT, which is included in PSI, a stream type, an additional field, and a descriptor may be changed depending on the type of service. The stream type of the PMT may be defined as 0x24 for the above-described BC HDR service, and the above-described HEVC_HDR_WCG_descriptor may be newly defined. HEVC_HDR_WCG_descriptor may indicate HDR to which the program is applied using both an EOTF type field and an SEI flag field or using only an HDR type field. The stream type field of the PMT may be set so as to have a new stream type value for the above-described NBC HDR service. This may indicate that the stream is an NBC HDR stream encoded in HEVC. The details of the above-described BC HDR service may be equally applied to HEVC_HDR_WCG_descriptor. The stream type field of the PMT may be set to 0x24 and 0x25 for the above-described BC HFR service. 0x24 may mean an HEVC descriptor, and 0x25 may mean an HEVC descriptor and a hierarchy descriptor. That the stream_type field is 0x24 may mean that the stream is an HEVC stream (Rec. ITU-T H.265|ISO/IEC 23008-2 video stream or an HEVC temporal video sub-bitstream). That is, it may be interpreted that an HEVC stream is 0x24 and that the stream includes HEVC_video_descriptor. The stream type field of the PMT may be set to 0x24 for the above-described NBC HFR service. 0x24 may mean an HEVC descriptor. The difference from the above-described NBC HDR service is that the receiver must block a stream based on stream_type, since HDR cannot be divided into profiles, whereas HFR can be blocked in levels.

For an SDT, which is included in SI, a service_type field and a component descriptor may be changed depending on the type of service. The service_type field may be set to 0x1F for the above-described BC HDR service, and may indicate that the service is an HEVC digital television service. As to the component descriptor, a first component descriptor including a component type related to phase 1 and a second component descriptor including a component type additionally indicating a BC HDR type may be signaled together. The service_type field may be set to 0x20 for the above-described NBC HDR service, and may indicate that the type is UHD-1 phase 2 service type. As to the component descriptor, it is necessary to newly define a dedicated component type for a UHD-1 phase 2 service. This was described previously with reference to FIG. 8. The service_type field may be set to 0x1F for the above-described BC HFR service, and may indicate that the service is an HEVC digital television service. As to the component descriptor, a first component descriptor including a component type related to phase 1 and a second component descriptor including a component type additionally indicating a BC HFR type may be signaled together. The service_type field of the PMT may be set to 0x20 for the above-described NBC HFR service, and may indicate that the type is a UHD-1 phase 2 service type. In addition, as to the component descriptor, it is necessary to add a component type for HFR UHD.

For an EIT, which is included in SI, a component descriptor and a linkage descriptor may be changed depending on the type of service. As to the component descriptor for the above-described BC HDR service, a first component descriptor including a component type related to phase 1 and a second component descriptor including a component type indicating BC HDR may be signaled together. As to the component descriptor for the above-described NBC HDR service, a dedicated component type for a UHD-1 phase 2 service may be defined. As to the linkage descriptor, it is necessary to define a phase 2 target event. For example, the definition of an advanced UHD event may be added. As the component descriptor for the above-described BC HFR service, a component type for HFR UHD may be further defined. As to the linkage descriptor, it is necessary to define a phase 2 target event.

As described above, the present invention may newly define or change fields included in the service type and the component descriptor included in the existing PMT, SDT, or EIT in order to provide a BC HDR/HFR HEVC UHD service and an NBC HDR/HFR HEVC UHD service and to provide signaling information thereabout.

Next, the sequence of the operation of the broadcast signal reception apparatus that receives the BC HDR/HFR HEVC UHD service and the NBC HDR/HFR HEVC UHD service proposed by the present invention will be described.

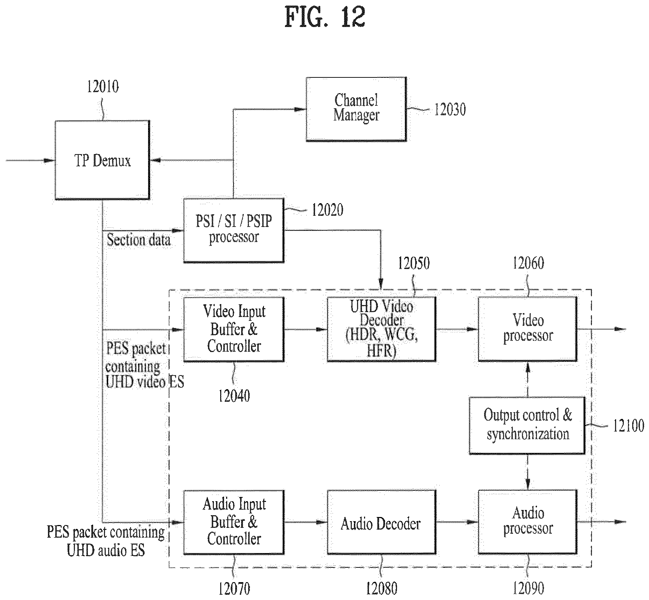

FIG. 12 is a block diagram showing a broadcast signal reception apparatus according to an embodiment of the present invention. The broadcast signal reception apparatus may include at least one of a TP (transport packet) demultiplexer 12010, a PSI/SI/PSIP processor 12020, a channel manager 12030, a video input buffer and controller 12040, a UHD video decoder 12050, a video processor 12060, an audio input buffer and controller 12070, an audio decoder 12080, an audio processor 12090, and an output control and synchronization unit 12100. Here, some of the elements may be optional, and the present invention is characterized by processing of a video stream and signaling information.

The broadcast signal reception apparatus may sort a TP into PSI/PSIP/SI section information (section data) necessary to identify channel information, a video packet, and an audio packet through the TP demultiplexer 12010. The sorted video packet and audio packet may be input to the buffers 12040 and 12070, which are located before the video decoder and the audio decoder. The PSI/SI/PSIP processor 12020 extracts information necessary to operate the TP demultiplexer 12010, the channel manager 12030, and a UI. The PSI/SI/PSIP processor 12020 may update a channel map through the received section data (e.g. a PMT, an SDT, or an EIT).

The PSI/SI/PSIP processor 12020 identifies stream_type of the PMT. In the case in which the service is BC HDR, the PSI/SI/PSIP processor 12020 may determine whether stream_type is 0x24, which means a temporal sub-bitstream of existing HEVC. In the case in which the service is NBC HDR, the PSI/SI/PSIP processor 12020 may determine whether stream_type is a new stream_type for NBC HDR. In the case in which the service is BC HFR, the PSI/SI/PSIP processor 12020 may determine whether stream_type is 0x24/0x25, which means a temporal sub-bitstream and temporal subset of existing HEVC. In some embodiments, in the case in which an enhancement layer is used for 3D or SHVC, stream_type may be 0x28/0x29 or 0x2A/0x2B. In the case in which the service is NBC HFR, the PSI/SI/PSIP processor 12020 may determine whether stream_type is 0x24, which means a temporal sub-bitstream of existing HEVC. In some embodiments, in the case in which an enhancement layer is used for 3D or SHVC, stream_type may be 0x28 or 0x2A.

Subsequently, the PSI/SI/PSIP processor 12020 identifies an additional field + descriptor included in the PMT. In the case in which the service is a BC HDR or NBC HDR service, the PSI/SI/PSIP processor 12020 identifies an HDR solution through EOTF_type of HEVC_HDR_WCG_descriptor() and xxx_sei_flag indicating which SEI message is included. In addition, the PSI/SI/PSIP processor 12020 may also identify HDR that is applied through HDR type. Consequently, the PSI/SI/PSIP processor 12020 may determine whether the HDR solution is supported by the receiver. In the case in which the service is a BC HFR or NBC HFR service, the PSI/SI/PSIP processor 12020 may identify the level of each stream through an HEVC descriptor included in an HEVC temporal sub-bitstream and an HEVC descriptor and a hierarchy descriptor included in an HEVC temporal subset. For example, in the case of 0x24, sub_layer_level_idc for the highest temporal id may be included. In the case of 0x25, general-level-idc for the highest temporal id may be included. Consequently, the PSI/SI/PSIP processor 12020 determines whether the level can be decoded by the receiver.

Subsequently, the PSI/SI/PSIP processor 12020 may identify a service descriptor included in the SDT. In the case in which the service is a BC HDR or BC HFR service, the PSI/SI/PSIP processor 12020 determines that the channel provides an HEVC digital television service. In the case in which the service is an NBC HDR or NBC HFR service, the PSI/SI/PSIP processor 12020 may determine that the channel provides a UHD-1 phase 2 service type service. This is a service corresponding to 0x20, which is a newly defined service type. The service types of a BC HDR or BC HFR service may be bound, or may be divided into CPA (HEVC UHD + HDR) /CPB (CPA + HFR).

Additionally, in the case in which a component descriptor(s) is included in an SDT/EIT, the PSI/SI/PSIP processor 12020 may recognize information, such as a codec type and the resolution of video included in order to additionally provide HDR and HFR services to UHD through each component descriptor. That is, the PSI/SI/PSIP processor 12020 may recognize a UHD service through a first component descriptor, and may determine whether HDR or HFR is applied to the UHD service through a second component descriptor. The receiver determines whether video, audio, and subtitle streams provided by the service can be decoded using information specified in the component descriptor(s).

In the case in which the service is BC HDR, information may be recognized through a component type indicating a BC HDR type, in addition to phase-1-related component type (a component descriptor including 0x9, 0x0, and 0x04 HEVC UHD video). In the case in which the service is NBC HDR, information may be recognized through a component type indicating an NBC HDR type for only phase 2. In the case in which the service is BC HFR, information may be recognized through component type including a temporal subset for HFR, in addition to phase 1-related component type (a component descriptor including 0x9, 0x0, and 0x04 HEVC UHD video). In the case in which the service is NBC HFR, information may be recognized through component type for phase 2, excepting a phase-1-related component type (a component descriptor including 0x9, 0x0, and 0x04 HEVC UHD video). A detailed description thereof is identical to the description made with reference to FIGs. 7 and 8.

The PSI/SI/PSIP processor 12020 may identify the value of component_tag in the component descriptor for each stream, and may identify a stream matched with the value of component_tag using a stream_identifier descriptor of the PMT. Consequently, the broadcast signal reception apparatus may deliver the PID stream to the video decoder 12050 and the audio decoder 12080 for decoding.

The decoded video signal may be input to the video processor 12060 for processing, and the decoded audio signal may be input to the audio processor 12090 for processing. The video processor and the audio processor may be controlled by the output control and synchronization unit 12100 such that the signals are output from the respective processors in a synchronized state.

FIG. 13 is a view showing a process of doubling SFR video to generate HFR video in accordance with an embodiment of the present invention. The above-described SFR is a frame rate corresponding to 60 Hz (60p), and HRF is a frame rate corresponding to 120 Hz (120p). The broadcast signal transmission apparatus may double or interpolate the frames of an original video source corresponding to 60p SFR in order to generate and transmit a 120p HFR video source. In an embodiment of the present invention, this process may be called doubling or interpolating of an original video source. In this embodiment, doubling or interpolating of each frame included in an original video source will be described. However, the technical features of the present invention may be equally applied to tripling, quadrupling, quintupling, or sextupling of each frame included in an original video source.

In the figure, 13010 indicates an original video source having 60 frames per second (60p). As shown, the original video source may include frame 1, frame 2, frame 3, frame 4, etc. The broadcast signal transmission apparatus may double or interpolate the frames included in the original video source in order to generate 120p frames, as indicated by 13020. That is, as shown, 120p frames, which are obtained as the result of doubling or interpolating, may include frame 1, frame 1', frame 2, frame 2', frame 3, frame 3', frame 4, frame 4', etc. That is, it can be seen that 13020 includes twice as many frames as 13010. Here, the frames may be duplicated identically to original frames, or may be duplicated by reflecting the result of interpolation. In the case in which the frames are duplicated identically to original frames, frame 1 and frame 1' may have the same data. In the case in which the frames are duplicated by reflecting the result of interpolation, frame 1 and frame 1' may have similar but not identical data. Here, interpolation may be performed using the values of the current original frame and the next original frame. That is, frame 1' may be a result obtained by interpolating frame 1 and frame 2. The broadcast signal transmission apparatus may transmit frame-marking information together with the duplicated frames. The broadcast signal transmission apparatus may set frame-marking information for each frame, and frame-marking information for each frame may be transmitted together with the frame. The frame-marking information may include information indicating whether the frame is the first frame of a set of doubled frames (start_of_cadence_flag) and information indicating whether the frame is an original frame (original_frame_flag).

As shown, frame 1 may include frame-marking information S and O, since frame 1 is an original frame and the first one of the doubled frames. In addition, frame 2, frame 3, and frame 4 may include frame-marking information O, which indicates that the frames are original frames. No frame-marking information may be assigned to the duplicated frames 1', 2', 3', and 4'. The broadcast signal transmission apparatus may add frame-marking information to an encoded video source as a method of duplicating frames in order to provided signaling information necessary for the reception end to restore the original video source. In this specification, the frame-marking information may also be called original frame information.

In the previous embodiment, frame-marking information, specifically information indicating the first frame to which the frame rate change is applied and information indicating that the frame is an original frame, was described briefly. Detailed signaling information may be described with reference to the lower end of the figure.

The lower end of the figure shows frame-marking information according to an embodiment of the present invention. The frame-marking information may include information necessary to restore the original video source from the video source encoded by the transmission end and received. The frame-marking information may indicate that each frame is a frame generated by a specific doubling method, a simply duplicated frame, or an interpolated frame. In addition, as previously described, the first one of the doubled frames may be marked S (start), and the last frame may be marked E (end). In some embodiments, frame marking S may be represented using a random access point. In addition, a frame matched with a frame in the original video source may be marked O (original). The reception end may restore the original video in order to deliver the artistic intent of the original video to a viewer. The reception end may restore the original video from the video encoded by the transmission end, and may generate video having further improved image quality from the original video using a frame-rate controller (FRC) included therein.

In an embodiment of the present invention, a prefix SEI (Supplemental Enhancement Information) NAL (Network Abstraction Information) unit or a suffix SEI NAL unit may include a user_data_registered_itu_t_t35() SEI message. In addition, the user_data_registered_itu_t_t35() SEI message may include an original frame info SEI message. As shown, the original frame info SEI message may be represented as original_frame_info. In an embodiment of the present invention, original_frame_info may be included in each picture.

original_frame_info may include at least one of a frame_type element, a start_of_cadence_flag element, an end_of_cadence_flag element, or an original_frame_flag element. The frame_type element may indicate the type of frame rate change. That is, information about the frame-doubling method used when the transmission end generates encoded video data using original video data may be included. As previously described, frame doubling, frame tripling, frame quadrupling, frame quintupling, or frame sextupling may be used as the frame-doubling method. The frame_type element may include multiple information about a multiple used in the doubling method. The start_of_cadence_flag element may indicate whether the current frame is the start point of a pattern related to a frame rate change. That is, this element may indicate that the current frame is the first one of the frames to which the frame rate change is applied. The encoder of the transmission end must set the value of the start_of_cadence_flag element to 1 for the first frame of the video sequence encoded by the frame rate change. The end_of_cadence_flag element may indicate that the current frame is the end point of a pattern related to the frame rate change. That is, this element may indicate that the current frame is the last one of the frames to which the frame rate change is applied. The encoder of the transmission end must set the value of the end_of_cadence_flag element to 1 for the last frame of the video sequence encoded by frame rate change. The original_frame_flag element may indicate whether the current frame is a frame matched with a frame of the original video source. This element may indicate that a frame for which the original_frame_flag element is set is not a simply duplicated or interpolated frame.

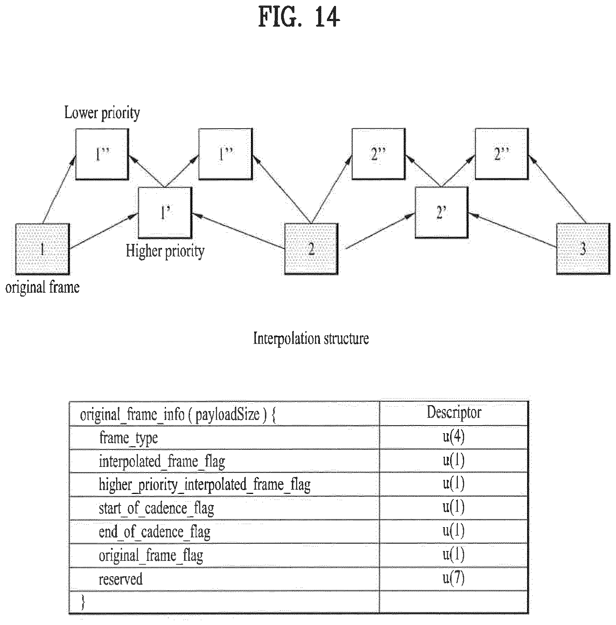

FIG. 14 shows a frame-rate-doubling method through interpolation according to an embodiment of the present invention. As shown in the upper end of the figure, the broadcast signal transmission apparatus may interpolate original frames 1 and 2 to generate frame 1', may interpolate original frame 1 and frame 1' to generate frame 1", and may interpolate frame 1' and original frame 2 to generate frame 1". Here, frame 1' may be defined as a frame having a higher priority, and frame 1" may be defined as a frame having a lower priority. In such an interpolating structure, transmitted original_frame_info is as shown in the lower end of the figure. original_frame_info was previously described with reference to FIG. 13, and may describe additionally signaled information. interpolated_frame_flag: may signal whether the frame is a frame made by interpolation.

In the case in which the frame is a frame made by interpolation, a higher_priority_interpolated_frame_flag field may indicate whether the frame is a higher priority frame. In the case in which the frame is an interpolated frame, as described above, frame 1' may have higher priority than frame 1". The reason for this is that the image is an image interpolated with reference only to the original frames 1 and 2, which are the original image. In the case in which the original image is a 25p image, the image is encoded into a 100p image as the result of interpolation. In the case in which the reception end shows only 50p, the reception end may display the image in the sequence of 1, 1', 2, 2', etc. with reference to higher_priority_interpolated_frame_flag. That is, the broadcast signal reception apparatus may display the image while omitting frames 1" and 2", which have low priority, based on higher_priority_interpolated_frame_flag information.

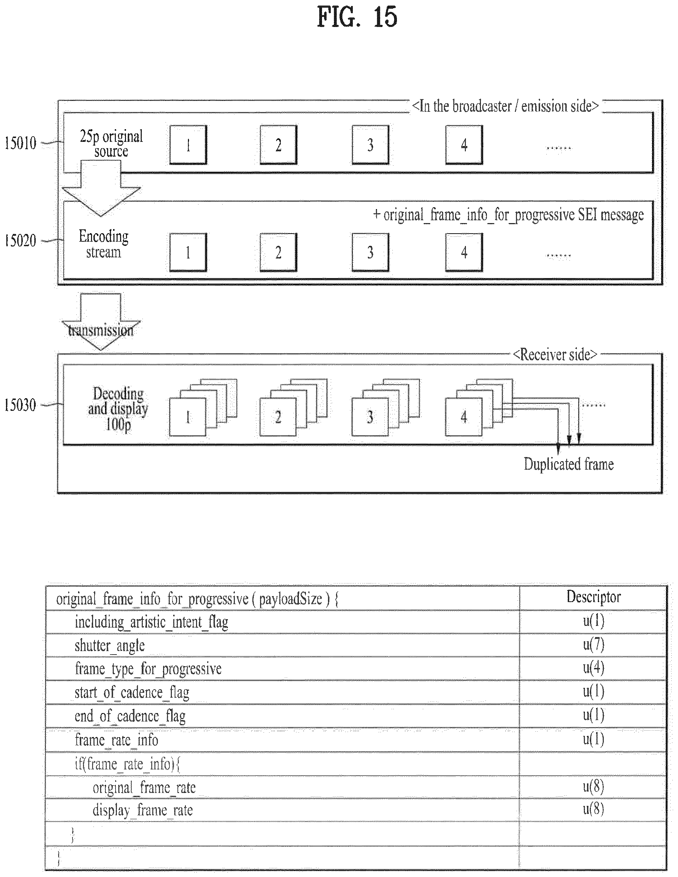

FIG. 15 is a view showing a method of the transmission end transmitting SFR video and the reception end displaying the same as HFR video in accordance with an embodiment of the present invention. In the present invention, the broadcast signal transmission apparatus may encode a stream while maintaining an existing lower frame rate or standard frame rate (SFR). In addition, the broadcast signal transmission apparatus may also deliver signaling about how many times the stream must be duplicated (a decoded image may be duplicated x2, x3, x4, x5, x6, etc.) in order for the reception end to show the stream as HFR. That is, this method is a method of enabling the broadcast signal reception apparatus to decode a lower-frame-rate or SFR image as an HFR image. The broadcast signal transmission apparatus may multiplex an original_frame_info_for_progressive SEI message together with the original video source in order to encode the stream. original_frame_info may deliver information necessary for the reception end to duplicate the frames of the original video source and to display the same as HFR. At the upper end of the figure, 15010 indicates an original video source having 25p. As shown, the original video source may include frame 1, frame 2, frame 3, frame 4, etc. The broadcast signal transmission apparatus may add original_frame_info to the original video source in the form of an SEI message in order to encode and transmit a video stream. The broadcast signal reception apparatus may receive the 25p original video source, may duplicate frames based on original_frame_info, and may display a lOOp image using the duplicated frames and the original frames. The duplicated frames do not actually exist, and thus do not need to be decoded. However, frames may be duplicated and displayed using a frame_type_for_progressive field included in the original_frame_info_for_progressive SEI message. In the case in which artistic intent needs to be preserved, only the original frames may be decoded and displayed based on information of an original_frame_rate field.

The lower end of the figure shows the syntax structure of original_frame_info_for_progressive. In the present invention, a prefix SEI (Supplemental Enhancement Information) NAL (Network Abstraction Information) unit or a suffix SEI NAL unit may include a user_data_registered_itu_t_t35() SEI message. The user_data_registered_itu_t_t35() SEI message may include an original_frame_info_for_progressive SEI message. A description of each field is identical to the description made with reference to FIG. 13. Hereinafter, added fields will be described. An including_artistic_intent_flag field may signal whether the video includes artistic intent. In the case in which signaling that artistic intent needs to be preserved is included, the receiver may output the original source without any change while ignoring other field values of frame_type_for_progressive. A shutter_angle field may include shutter angle information of a captured stream. Shutter angle = frame rate * 360 degrees / shutter speed. In the case in which the shutter angle of a 24 frames/s image is 180 degrees, therefore, it can be seen that the frame is exposed by shutter speed 48, i.e. 1/48 seconds. Here, the shutter angle value may be delimited in units of 5 degrees. That is, a maximum of 72 angles may be provided as shutter_angle values in order to constitute 360 degrees. In addition, separate bits may be assigned in order to additionally provide angles in decimal units. For example, the shutter angle may be signaled using two fields, such as shutter_angle and shutter_angle_floating_point. Since the frame may be displayed brighter than the original source when the receiver repeats the frame (picture), the receiver may use the shutter angle value in order to compensate for the difference in luminance. A frame_type_for_progressive field may be set in order to include x4, x5, x6, etc, which are not included in the value of pic_struct of an existing pic_timing SEI message. The frame_type_for_progressive field may signal how many times the reception end duplicates the original frame. That is, when the broadcast signal transmission apparatus transmits an SEI message including a frame_type_for_progressive field indicating "4 times frame repetition" together with an existing 25p image, the reception end may output the 25p image as a lOOp image through frame repetition. A frame_rate_info field is a flag indicating whether information about the frame rate of an actually captured stream (original_frame_rate) or frame rate that can be displayed (display_frame_rate) is included.

In order to signal that an FPA SEI message is included in video data, SI/PSI may be extended so as to signal whether a proposed original_frame_info_for_progressive SEI message exists, like non_packed_constraint_flag included in the HEVC video descriptor of the PMT. Similar application may be made to the original_frame_info SEI message described with reference to FIGs. 13 and 14. To this end, the HEVC video descriptor included in the PMT may be extended, or a new descriptor may be made in order to provide a lower frame rate to an HFR stream. The extended HEVC video descriptor or the new descriptor may be signaled while being included in SI/PSI. SI/PSI may be extended such that original_frame_rate and display_frame_rate also signal the actual frame rate and displayable frame rate, respectively, like signaling whether an SEI message exists.

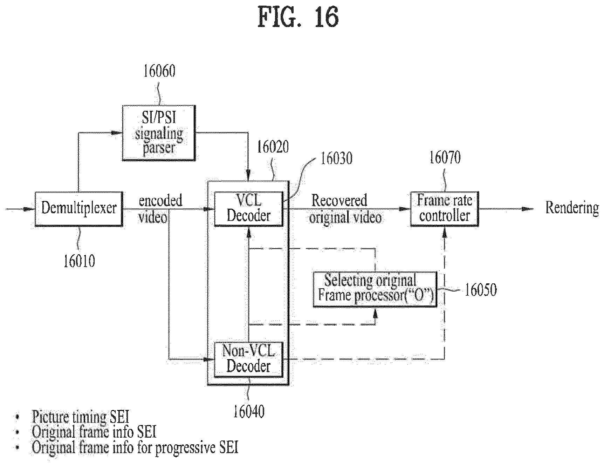

FIG. 16 is a view showing the construction of a broadcast signal reception apparatus according to an embodiment of the present invention. A video stream according to an embodiment of the present invention may include at least one of a picture timing SEI message, an original_frame_info SEI message, or an original_frame_info_for_progressive SEI message. The picture timing SEI message may include a frame_field_info_present_flag element, a pic_struct element, and/or a duplicate_flag element. The original_frame_info SEI message may include the elements described previously with reference to FIGs. 13 and 14. The original_frame_info_for_progressive SEI message may include the elements described previously with reference to FIG. 15.

The broadcast signal reception apparatus may include at least one of a demultiplexer 16010, a decoder 16020, an original-frame-selecting processor 16050, an SI/PSI signaling parser 16060, or a frame rate control processor 16070. The decoder 16020 may include a VCL (Video Coding Layer) decoder 16030 and/or a Non-VCL decoder 16040. Some of the structural elements included in the broadcast signal reception apparatus may be omitted depending on the intention of a designer.

The demultiplexer 16010 may receive a broadcast signal, may demultiplex SI/PSI signaling information from the received broadcast signal, and may output the same to the SI/PSI signaling parser 16060. Here, the SI/PSI signaling information may include information about an original frame rate or a displayable frame rate. Furthermore, the demultiplexer may demultiplex frame-rate-change-encoded video including an SEI message or original-frame-rate video including an SEI message from the broadcast signal, and may output the same to the VCL decoder and the Non-VCL decoder. The Non-VCL decoder may decode at least one of a picture timing SEI message, an original_frame_info SEI message, or an original_frame_info_for_progressive SEI message from the encoded video.

The decoder 16020 may decode the input SI/PSI signaling information, frame-rate-change-encoded video stream, original-frame-rate video stream, picture timing SEI message, original_frame_info SEI message, and original_frame_info_for_progressive SEI message. The VCL (Video Coding Layer) decoder 16030 may decode the frame-rate-change-encoded video stream or the original-frame-rate video stream. The Non-VCL decoder 16040 may decode the input picture timing SEI message, original_frame_info SEI message, and original_frame_info_for_progressive SEI message.

The original-frame-selecting processor 16050 may select the original frames based on the picture timing SEI message and/or the original_frame_info SEI message decoded by the Non-VCL decoder 16040. That is, the original-frame-selecting processor may selectively extract frames matched with the frames included in the original video source from among frame-rate-change-encoded frames decoded by the VCL decoder 16030. That is, the original-frame-selecting processor may selectively extract the above-described 'O'-marked frames, i.e. frames for which the original_frame_flag element is set, in order to restore the original frame rate. As a result, the output of the original-frame-selecting processor 16050 may be recovered original video. In some embodiments, the original-frame-selecting processor 16050 may be operated in the state of being included in the decoder 16020.

The frame rate control processor 16070 may control the frame rate of the recovered original video. That is, the reception end may provide video having image quality that is improved over that of the received encoded video using the frame rate control processor 16070, which is included in the receiver. In this process, a frame-doubling method may be used, and the receiver may provide frame-rate-changed video through rendering. The frame rate control processor 16070 may duplicate the frames included in the original-frame-rate video stream based on the value of the frame_type_for_progressive field included in the original_frame_info_for_progressive SEI message. As a result, the original frame rate may be changed to HFR, and the video stream may be displayed. In some embodiments, the frame rate control processor 16070 may be omitted from the receiver. In this case, the receiver may provide original video having the original frame rate without a separate frame rate change.

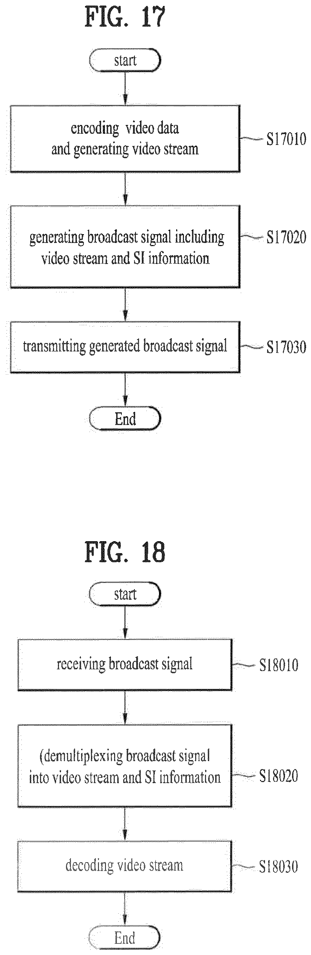

FIG. 17 is a view showing a broadcast signal transmission method according to an embodiment of the present invention. The broadcast signal transmission method may include a step of encoding video to generate a video stream (S17010), a step of generating a broadcast signal including the generated video stream and subtitle information (S17020), and a step of transmitting the generated broadcast signal (S17030).

At the step of encoding video to generate the video stream (S17010), video data having a resolution of UHD, HD, or SD may be received, and the video data may be encoded to generate the video stream. Here, the video stream may be encoded in HEVC (High Efficiency Video Coding). The video stream may be a video ES (elementary stream) or a video PES (packetized elementary stream), which is obtained by packetizing the video ES. At the step of generating the video stream, the original_frame_info SEI message or the original_frame_info_for_progressive SEI message described with reference to FIGs. 13 and 14 may be encoded together with the video data.

At the step of generating the broadcast signal including the generated video stream and PSI or SI information (S17020), the encoded video stream and the PSI or SI information may be multiplexed to generate a transport stream (TS). The PSI or SI information may include information related to the HDR and HFR UHD services described with reference to FIGs. 2 to 11. A detailed description thereof is identical to the above description.

At the step of transmitting the generated broadcast signal (S17030), the transport stream may be transmitted as the broadcast signal. Here, the transport stream may be channel-coded and modulated before transmission, and may then be transmitted as the broadcast signal.

FIG. 18 is a view showing a broadcast signal reception method according to an embodiment of the present invention. The broadcast signal reception method may include a step of receiving a broadcast signal (S18010), a step of demultiplexing the received broadcast signal into PSI or SI information and a video stream (S18020), and a step of decoding the video stream (S18030).

At the step of receiving the broadcast signal (S18010), the broadcast signal received using the receiver may be demodulated and channel-decoded. At the step of demultiplexing the received broadcast signal into the PSI or SI information and the video stream (S18020), the channel-decoded broadcast signal may be demultiplexed into the video stream and the PSI or SI information using the demultiplexer. The PSI or SI information may include information related to the HDR and HFR UHD services described with reference to FIGs. 2 to 11. A detailed description thereof is identical to the above description.

At the step of decoding the video stream (S18030), the video stream may be decoded using the video decoder in order to acquire video data. At this step, the video decoder may identify the original_frame_info SEI message or the original_frame_info_for_progressive SEI message described with reference to FIGs. 13 and 14, and may decode and process the video data using the value of the field included in the SEI message in order to output the video data.

While the present invention has been described with reference to separate drawings for the convenience of description, new embodiments may be implemented by combining embodiments illustrated in the respective drawings. As needed by those skilled in the art, designing a computer-readable recording medium, in which a program for implementing the above-described embodiments is recorded, falls within the scope of the present invention.

The apparatus and method according to the present invention is not limitedly applied to the constructions and methods of the embodiments as previously described; rather, all or some of the embodiments may be selectively combined to achieve various modifications.

Meanwhile, the broadcast signal transmission and reception method according to the present invention may be implemented as code that can be written on a processor-readable recording medium and thus read by a processor provided in a network device. In addition, the broadcast signal transmission and reception method according to the present invention may be performed by a hardware processor. The processor-readable recording medium may be any type of recording device in which data is stored in a processor-readable manner. The processor-readable recording medium may include, for example, read only memory (ROM), random access memory (RAM), compact disc read only memory (CD-ROM), magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

It will be apparent that, although the preferred embodiments have been shown and described above, the present specification is not limited to the above-described specific embodiments, and various modifications and variations can be made by those skilled in the art to which the present invention pertains without departing from the scope of the appended claims.

In addition, the present specification describes both a product invention and a method invention, and descriptions of the two inventions may be complementarily applied as needed.

### [Mode for Invention]

Various embodiments have been described in the best mode for carrying out the invention.

### [Industrial Applicability]

The present invention has industrial applicability in that the present invention can be repeatedly used in broadcast and video signal processing fields.

## Claims

1. A broadcast signal transmission method comprising:
encoding (1011) Ultra High Definition, UHD, video data in High Efficiency Video Coding, HEVC, to generate an HEVC UHD video stream;
generating a broadcast signal (1012) comprising the generated HEVC UHD video stream and service information, the service information comprising a service description table, SDT; and
transmitting (1013) the generated broadcast signal,
**characterized in that** the SDT comprises service type information, the service type information indicating a UHD video service to which at least one of backward-compatible High Dynamic Range, HDR, and backward-compatible High Frame Rate, HFR, is applied or a UHD video service to which at least one of non-backward-compatible HDR and non-backward-compatible HFR is applied.

2. The broadcast signal transmission method according to claim 1, wherein the service type information of the UHD video service to which the at least one of non-backward-compatible HDR and non-backward-compatible HFR is applied is set to 0x20.

3. The broadcast signal transmission method according to claim 1, wherein the SDT comprises a component descriptor, the component descriptor identifying a component stream of the UHD video service using a stream content field, a stream content extension field, and a component type field, and wherein a component stream of the UHD video service to which the at least one of backward-compatible HDR and backward-compatible HFR is applied is identified by multiple component descriptors.

4. The broadcast signal transmission method according to claim 3, wherein the component stream of the UHD video service to which the backward-compatible HFR is applied is identified using a first component descriptor and a second component descriptor together, and wherein the stream content field, the stream content extension field, and the component type field contained in the first component descriptor and the second component descriptor are set to values of 0x9, 0x0, and 0x04 and values of 0xB, 0xF, and 0x05, respectively.

5. The broadcast signal transmission method according to claim 4, wherein the component descriptor identifying the component stream of the UHD video service to which the at least one of non-backward-compatible HDR and non-backward-compatible HFR is applied is set to values different from the values of 0x9, 0x0, and 0x04, which are set for the first component descriptor, in terms of the stream content field, the stream content extension field, and the component type field.

6. A broadcast signal transmission apparatus comprising:
a video (1011) for encoding Ultra High Definition, UHD, video data in High Efficiency Video Coding, HEVC, to generate an HEVC UHD video stream;
a multiplexer (1012) for generating a broadcast signal comprising the generated HEVC UHD video stream and service information, the service information comprising a service description table, SDT; and
a transmitter (1013) for transmitting the generated broadcast signal,
**characterized in that** the SDT comprises service type information, the service type information indicating a UHD video service to which at least one of backward-compatible High Dynamic Range, HDR, and backward-compatible High Frame Rate, HFR, is applied or a UHD video service to which at least one of non-backward-compatible HDR and non-backward-compatible HFR is applied.

7. The broadcast signal transmission apparatus according to claim 6, wherein the service type information of the UHD video service to which the at least one of non-backward-compatible HDR and non-backward-compatible HFR is applied is set to 0x20.

8. The broadcast signal transmission apparatus according to claim 6, wherein the SDT comprises a component descriptor, the component descriptor identifying a component stream of the UHD video service using a stream content field, a stream content extension field, and a component type field, and wherein a component stream of the UHD video service to which the at least one of backward-compatible HDR and backward-compatible HFR is applied is identified by multiple component descriptors.

9. The broadcast signal transmission apparatus according to claim 8, wherein the component stream of the UHD video service to which the backward-compatible HFR is applied is identified using a first component descriptor and a second component descriptor together, and wherein the stream content field, the stream content extension field, and the component type field contained in the first component descriptor and the second component descriptor are set to values of 0x9, 0x0, and 0x04 and values of 0xB, 0xF, and 0x05, respectively.

10. The broadcast signal transmission apparatus according to claim 9, wherein the component descriptor identifying the component stream of the UHD video service to which the at least one of non-backward-compatible HDR and non-backward-compatible HFR is applied is set to values different from the values of 0x9, 0x0, and 0x04, which are set for the first component descriptor, in terms of the stream content field, the stream content extension field, and the component type field.

11. A broadcast signal reception method comprising:
receiving (1021) a broadcast signal, the broadcast signal comprising a High Efficiency Video Coding, HEVC, Ultra High Definition, UHD, video stream and service information;
demultiplexing (1022) the received broadcast signal into the HEVC UHD video stream and the service information, the service information comprising a service description table, SDT;
decoding (1023) the HEVC UHD video stream and the service information; and
processing (1024) the HEVC UHD video stream,
**characterized in that** the SDT comprises service type information, the service type information indicating a UHD video service to which at least one of backward-compatible High Dynamic Range, HDR, and backward-compatible High Frame Rate, HFR, is applied or a UHD video service to which at least one of non-backward-compatible HDR and non-backward-compatible HFR is applied.

12. The broadcast signal reception method according to claim 11, wherein the service type information of the UHD video service to which the at least one of non-backward-compatible HDR and non-backward-compatible HFR is applied is set to 0x20.

13. The broadcast signal reception method according to claim 11, wherein the SDT comprises a component descriptor, the component descriptor identifying a component stream of the UHD video service using a stream content field, a stream content extension field, and a component type field, and wherein a component stream of the UHD video service to which the at least one of backward-compatible HDR and backward-compatible HFR is applied is identified by multiple component descriptors.

14. A broadcast signal reception apparatus comprising:
a tuner (1021) for receiving a broadcast signal, the broadcast signal comprising a High Efficiency Video Coding, HEVC, Ultra High Definition, UHD, video stream and service information;
a demultiplexer (1022) for demultiplexing the received broadcast signal into the HEVC UHD video stream and the service information, the service information comprising a service description table, SDT;
a decoder (1023) for decoding the HEVC UHD video stream and the service information; and
a video processor (1024) for processing the HEVC UHD video stream,
**characterized in that** the SDT comprises service type information, the service type information indicating a UHD video service to which at least one of backward-compatible High Dynamic Range, HDR, and backward-compatible High Frame Rate, HFR, is applied or a UHD video service to which at least one of non-backward-compatible HDR and non-backward-compatible HFR is applied.

15. The broadcast signal reception apparatus according to claim 14, wherein the service type information of the UHD video service to which the at least one of non-backward-compatible HDR and non-backward-compatible HFR is applied is set to 0x20, wherein the SDT comprises a component descriptor, the component descriptor identifying a component stream of the UHD video service using a stream content field, a stream content extension field, and a component type field, and wherein a component stream of the UHD video service to which the at least one of backward-compatible HDR and backward-compatible HFR is applied is identified by multiple component descriptors.

## Patentansprüche

1. Rundfunksignal-Übertragungsverfahren umfassend:
Kodieren (1011) von Ultra High Definition, UHD, Videodaten in High Efficiency Video Coding, HEVC, um einen HEVC-UHD-Videostrom zu erzeugen;
Erzeugen eines Rundfunksignals (1012), das den erzeugten HEVC-UHD-Videostrom und Dienstinformationen umfasst, wobei die Dienstinformationen eine Dienstbeschreibungstabelle, SDT, umfassen; und
Übertragen (1013) des erzeugten Rundfunksignals,
**dadurch gekennzeichnet, dass** die SDT Diensttyp-Informationen umfasst, wobei die Diensttyp-Informationen einen UHD-Videodienst anzeigt, auf den mindestens einer aus rückwärtskompatiblem Hochdynamikbereich, HDR, und rückwärtskompatible Hochbildrate, HFR, angewendet wird, oder einen UHD-Videodienst, auf den mindestens einer aus nicht rückwärtskompatiblem HDR und nicht rückwärtskompatibler HFR angewendet wird.

2. Rundfunksignal-Übertragungsverfahren nach Anspruch 1, wobei die Diensttypinformationen des UHD-Videodienstes, auf den der nicht abwärtskompatible HDR und/oder der nicht abwärtskompatiblen HFR angewendet wird, auf 0x20 gesetzt wird.

3. Rundfunksignal-Übertragungsverfahren nach Anspruch 1, wobei die SDT einen Komponentendeskriptor umfasst, wobei der Komponentendeskriptor einen Komponentenstrom des UHD-Videodienstes unter Verwendung eines Strominhaltsfeldes, eines Strominhaltserweiterungsfeldes und eines Komponententypfeldes identifiziert, und wobei ein Komponentenstrom des UHD-Videodienstes, auf den des rückwärtskompatiblem HDR und/oder der rückwärtskompatiblen HFR angewendet wird, durch mehrere Komponentendeskriptoren identifiziert wird.

4. Rundfunksignal-Übertragungsverfahren nach Anspruch 3, wobei der Komponentenstrom des UHD-Videodienstes, auf den die rückwärtskompatible HFR angewendet wird, unter Verwendung eines ersten Komponentendeskriptors und eines zweiten Komponentendeskriptors zusammen identifiziert wird, und wobei das Strominhaltsfeld, das Strominhaltserweiterungsfeld und das Komponententypfeld, die in dem ersten Komponentendeskriptor und in dem zweiten Komponentendeskriptor enthalten sind, jeweils auf Werte von 0x9, 0x0 und 0x04 und auf Werte von 0xB, 0xF und 0x05 gesetzt werden.

5. Rundfunksignal-Übertragungsverfahren nach Anspruch 4, wobei der Komponentendeskriptor, der den Komponentenstrom des UHD-Videodienstes identifiziert, auf den der nicht abwärtskompatible HDR und/oder die nicht abwärtskompatible HFR angewendet wird, auf Werte gesetzt wird, die sich von den Werten 0x9, 0x0 und 0x04 unterscheiden, die für den ersten Komponentendeskriptor gesetzt sind, und zwar in Bezug auf das Strominhaltsfeld, das Strominhaltserweiterungsfeld und das Komponententypfeld.

6. Rundfunksignal-Übertragungsvorrichtung umfassend:
ein Video (1011) zur Kodierung von Ultra High Definition, UHD, Videodaten in High Efficiency Video Coding, HEVC, um einen HEVC-UHD-Videostrom zu erzeugen;
einen Multiplexer (1012) zum Erzeugen eines Rundfunksignals, das den erzeugten HEVC-UHD-Videostrom und Dienstinformationen umfasst, wobei die Dienstinformationen eine Dienstbeschreibungstabelle, SDT, umfassen; und
einen Sender (1013) zur Übertragung des erzeugten Rundfunksignals,
**dadurch gekennzeichnet, dass** die SDT Diensttyp-Informationen umfasst, wobei die Diensttyp-Informationen einen UHD-Videodienst anzeigt, auf den mindestens einer aus rückwärtskompatiblem Hochdynamikbereich, HDR, und rückwärtskompatibler Hochbildrate, HFR, angewendet wird, oder einen UHD-Videodienst, auf den mindestens einer aus nicht rückwärtskompatiblem HDR und nicht rückwärtskompatibler HFR angewendet wird.

7. Rundfunksignal-Übertragungsvorrichtung nach Anspruch 6, wobei die Diensttypinformation des UHD-Videodienstes, auf den der nicht abwärtskompatible HDR und/oder die nicht abwärtskompatible HFR angewendet wird, auf 0x20 gesetzt wird.

8. Rundfunksignal-Übertragungsvorrichtung nach Anspruch 6, wobei die SDT einen Komponentendeskriptor umfasst, wobei der Komponentendeskriptor einen Komponentenstrom des UHD-Videodienstes unter Verwendung eines Strominhaltsfeldes, eines Strominhaltserweiterungsfeldes und eines Komponententypfeldes identifiziert, und wobei ein Komponentenstrom des UHD-Videodienstes, auf den der rückwärtskompatible HDR und/oder die rückwärtskompatible HFR angewendet wird, durch mehrere Komponentendeskriptoren identifiziert wird.

9. Rundfunksignal-Übertragungsvorrichtung nach Anspruch 8, wobei der Komponentenstrom des UHD-Videodienstes, auf den der rückwärtskompatible HFR angewendet wird, unter Verwendung eines ersten Komponentendeskriptors und eines zweiten Komponentendeskriptors zusammen identifiziert wird, und wobei das Strominhaltsfeld, das Strominhalts-Erweiterungsfeld und das Komponententypfeld, die in dem ersten Komponentendeskriptor und in dem zweiten Komponentendeskriptor enthalten sind, jeweils auf Werte von 0x9, 0x0 und 0x04 und auf Werte von 0xB, 0xF und 0x05 gesetzt werden.

10. Rundfunksignal-Übertragungsvorrichtung nach Anspruch 9, wobei der Komponentendeskriptor, der den Komponentenstrom des UHD-Videodienstes identifiziert, auf den der nicht abwärtskompatible HDR und/oder die nicht abwärtskompatible HFR angewendet wird, auf Werte gesetzt ist, die sich von den Werten 0x9, 0x0 und 0x04 unterscheiden, die für den ersten Komponentendeskriptor gesetzt sind, und zwar in Bezug auf das Strominhaltsfeld, das Strominhaltserweiterungsfeld und das Komponententypfeld.

11. Rundfunksignal-Empfangsverfahren, umfassend:
Empfangen (1021) eines Rundfunksignals, wobei das Rundfunksignal einen High Efficiency Video Coding, HEVC, Ultra High Definition, UHD, Videostrom und Dienstinformationen umfasst;
Demultiplexen (1022) des empfangenen Rundfunksignals in den HEVC-UHD-Videostrom und die Dienstinformationen, wobei die Dienstinformation eine Dienstbeschreibungstabelle, SDT, umfassen;
Dekodieren (1023) des HEVC-UHD-Videostroms und der Dienstinformationen; und
Verarbeiten (1024) des HEVC-UHD-Videostroms,
**dadurch gekennzeichnet, dass** die SDT Diensttypinformationen umfasst, wobei die Diensttypinformationen einen UHD-Videodienst anzeigen, auf den mindestens einer aus rückwärtskompatiblem Hochdynamikbereich, HDR, und rückwärtskompatibler Hochbildrate, HFR, angewendet wird, oder einen UHD-Videodienst, auf den mindestens einer aus nicht rückwärtskompatiblem HDR und nicht rückwärtskompatibler HFR angewendet wird.

12. Rundfunksignal-Empfangsverfahren nach Anspruch 11, wobei die Diensttypinformationen des UHD-Videodienstes, auf den der nicht abwärtskompatible HDR und/oder die nicht abwärtskompatible HFR angewendet wird, auf 0x20 gesetzt wird.

13. Rundfunksignal-Empfangsverfahren nach Anspruch 11, wobei die SDT einen Komponentendeskriptor umfasst, wobei der Komponentendeskriptor einen Komponentenstrom des UHD-Videodienstes unter Verwendung eines Strominhaltsfeldes, eines Strominhaltserweiterungsfeldes und eines Komponententypfeldes identifiziert, und wobei ein Komponentenstrom des UHD-Videodienstes, auf den der rückwärtskompatible HDR und/oder die rückwärtskompatible HFR angewendet wird, durch mehrere Komponentendeskriptoren identifiziert wird.

14. Rundfunksignal-Empfangsgerät umfassend:
einen Tuner (1021) zum Empfangen eines Rundfunksignals , wobei das Rundfunksignal einen High Efficiency Video Coding, HEVC, Ultra High Definition, UHD, Videostrom und Dienstinformationen umfasst;
einen Demultiplexer (1022) zum Demultiplexen des empfangenen Rundfunksignals in den HEVC-UHD-Videostrom und die Dienstinformationen, wobei die Dienstinformationen eine Dienstbeschreibungstabelle, SDT, umfassen;
einen Dekoderierer (1023) zum Dekodieren des HEVC-UHD-Videostroms und der Dienstinformationen; und
einen Videoprozessor (1024) zur Verarbeitung des HEVC-UHD-Videostroms,
**dadurch gekennzeichnet, dass** die SDT Diensttypinformationen umfasst, wobei die Diensttypinformationen einen UHD-Videodienst anzeigen, auf den mindestens einer aus rückwärtskompatiblem Hochdynamikbereich, HDR, und rückwärtskompatibler Hochbildrate, HFR, angewendet wird, oder einen UHD-Videodienst, auf den mindestens einer aus nicht rückwärtskompatiblem HDR und nicht rückwärtskompatibler HFR angewendet wird.

15. Rundfunksignal-Empfangsgerät nach Anspruch 14, wobei die Diensttypinformationen des UHD-Videodienstes, auf den der nicht abwärtskompatible HDR und/oder die nicht abwärtskompatible HFR angewendet wird, auf 0x20 gesetzt wird, wobei die SDT einen Komponentendeskriptor umfasst, wobei der Komponentendeskriptor einen Komponentenstrom des UHD-Videodienstes unter Verwendung eines Strominhaltsfeldes, eines Strominhaltserweiterungsfeldes und eines Komponententypfeldes identifiziert, und wobei ein Komponentenstrom des UHD-Videodienstes, auf den der rückwärtskompatible HDR und/oder die rückwärtskompatible HFR angewendet wird, durch mehrere Komponentendeskriptoren identifiziert wird.

## Revendications

1. Procédé de transmission de signal de radiodiffusion consistant à :
coder (1011) des données vidéo ultrahaute définition, UHD, en codage vidéo haute performance, HEVC, pour générer un flux vidéo HEVC UHD ;
générer un signal de radiodiffusion (1012) comprenant le flux vidéo HEVC UHD et des informations de service, les informations de service comprenant une table de description de service, SDT ; et
transmettre (1013) le signal de radiodiffusion généré,
**caractérisé en ce que**
la SDT comprend des informations de type service, les informations de type service indiquant un service vidéo UHD auquel est appliquée une plage dynamique élevée rétrocompatible, HFR, et/ou une fréquence image élevée rétrocompatible, HFR, ou un service vidéo UHD auquel est appliquée une HDR non rétrocompatible et/ou une HFR non rétrocompatible.

2. Procédé de transmission de signal de radiodiffusion selon la revendication 1, les informations de type service du service vidéo UHD auquel est appliquée la HDR non rétrocompatible et/ou la HFR non rétrocompatible sont fixées à 0x20.

3. Procédé de transmission de signal de radiodiffusion selon la revendication 1, la SDT comprenant un descripteur de composant, le descripteur de composant identifiant un flux de composant du service vidéo UHD à l'aide d'un champ de contenu de flux, un champ d'extension de contenu de flux et un champ de type de composant, et un flux de composant du service vidéo UHD auquel est appliquée ladite HDR rétrocompatible et/ou la HFR rétrocompatible, est identifié par plusieurs descripteurs de composant.

4. Procédé de transmission de signal de radiodiffusion selon la revendication selon la revendication 3, le flux de composant du service vidéo UHD auquel est appliquée la HFR rétrocompatible est identifié à l'aide d'un premier descripteur de composant et d'un second descripteur de composant, et le champ de contenu de flux, le champ d'extension de contenu de flux et le champ de type de composant contenus dans le premier descripteur de composant et dans le second descripteur de composant étant fixés à des valeurs de 0x9, 0x0, et 0x04 et des valeurs de 0xB, 0xF, et 0x05, respectivement.

5. Procédé de transmission de signal de radiodiffusion selon la revendication 4, le descripteur de composant identifiant le flux de composant du service vidéo UHD auquel est appliquée ladite HDR non rétrocompatible et/ou ladite HFR non rétrocompatible, étant fixé à des valeurs différentes des valeurs de 0x9, 0x0, et 0x04 qui sont fixées pour le premier descripteur de composant, en termes du champ de contenu de flux, du champ d'extension de contenu de flux, et du champ de type de composant.

6. Appareil de transmission de signal de radiodiffusion comprenant :
une vidéo (1011) pour coder des données vidéo ultra-haute définition, UHD, en codage vidéo haute performance, HEVC, pour générer un flux de données HEVC UHD ;
un multiplexeur (1012) pour générer un signal de radiodiffusion comprenant le flux vidéo HEVC UHD généré et des informations de service, les informations de service comprenant une table de description de service, SDT ; et
un émetteur (1013) pour transmettre le signal de radiodiffusion généré,
**caractérisé en ce que**
la SDT comprend des informations de type service, les informations de type service indiquant un service vidéo UHD auquel est appliquée une plage dynamique élevée rétrocompatible, HFR, et/ou une fréquence image élevée rétrocompatible, HFR, ou un service vidéo UHD auquel est appliquée une HDR non rétrocompatible et/ou une HFR non rétrocompatible.

7. Appareil de transmission de signal de radiodiffusion selon la revendication 6, les informations de type service du service vidéo UHD auquel est appliquée une HDR non rétrocompatible et/ou une HFR non rétrocompatible, sont fixées à 0x20.

8. Appareil de transmission de signal de radiodiffusion selon la revendication 6, la SDT comprenant un descripteur de composant, le descripteur de composant identifiant un flux de composant du service vidéo UHD à l'aide d'un champ de contenu de flux, d'une champ d'extension de contenu de flux et un champ de type de composant et un flux de composant du service vidéo UHD auquel est appliquée une HDR rétrocompatible et/ou une HFR rétrocompatible, étant identifié par plusieurs descripteurs de composant.

9. Appareil de transmission de signal de radiodiffusion selon la revendication 8, le flux de composant du service vidéo UHD auquel est appliquée une HDR rétrocompatible, étant identifié à l'aide d'un premier descripteur de composant et d'un second descripteur de composant, et le champ de contenu de flux, le champ d'extension de contenu de flux et le champ de type de composant contenus dans le premier descripteur de composant et dans le second descripteur de composant étant fixés à des valeurs de 0x9, 0x0, et 0x04 et des valeurs de 0xB, 0xF, et 0x05, respectivement.

10. Appareil de transmission de signal de radiodiffusion selon la revendication 9, le descripteur de composant identifiant le flux de composant du service vidéo UHD auquel est appliquée une HDR non rétrocompatible et/ou une HFR non rétrocompatible, étant fixé à des valeurs de 0x9, 0x0, et 0x04, qui sont fixées pour le premier descripteur de composant, en termes de champ de contenu de flux, de champ d'extension de contenu de flux et de champ de type de composant.

11. Procédé de réception de signal de radiodiffusion consistant à :
recevoir (1021) un signal de radiodiffusion, le signal de radiodiffusion comprenant un flux vidéo ultra-haute définition, UHD, de codage vidéo haute performance, HEVC, et des informations de service ;
démultiplexer (1022) le signal de radiodiffusion reçu en flux vidéo HEVC UHD et les informations de service, les informations de service comprenant une table de description de service, SDT ;
décoder le flux vidéo HEVC UHD et les informations de service ; et
traiter (1024) le flux vidéo HEVC UHD,
**caractérisé en ce que**
la SDT comprend des informations de type service, les informations de type service indiquant un service vidéo UHD auquel est appliquée une plage dynamique élevée rétrocompatible, HDR, et/ou une fréquence image élevée rétrocompatible, HFR, ou un service vidéo UHD auquel est appliquée une HDR non rétrocompatible et/ou une HFR non rétrocompatible.

12. Procédé de réception de signal de radiodiffusion selon la revendication 11, les informations de type service du service vidéo UHD auquel est appliquée une HDR non rétrocompatible et/ou une HFR non rétrocompatible, étant fixées à 0x20.

13. Procédé de réception de signal de radiodiffusion selon la revendication 11,, la SDT comprenant un descripteur de composant, le descripteur de composant identifiant un flux de composant du service vidéo UHD à l'aide d'un champ de contenu de flux, d'un champ d'extension de contenu de flux et un champ de type de composant, et un flux de composant du service vidéo UHD auquel est appliquée une HDR rétrocompatible et/ou une HFR rétrocompatible, étant identifié par plusieurs descripteurs de composant.

14. Appareil de réception de signal de radiodiffusion comprenant :
un syntoniseur (1021) pour recevoir un signal de réception de radiodiffusion, le signal de radiodiffusion comprenant un flux vidéo ultra-haute définition, UHD, de codage vidéo haute performance, HEVC, et des informations de service ;
un démultiplexeur (1022) pour démultiplexer le signal de radiodiffusion reçu en flux vidéo HEVC UHD et les informations de service, les informations de service comprenant une table de description de service, SDT ;
un décodeur (1023) pour décoder le flux vidéo HEVC UHD et les informations de service ; et
un processeur vidéo (1024) pour traiter le flux vidéo HEVC UHD,
**caractérisé en ce que**
la SDT comprend des informations de type service, les informations de type service indiquant un service vidéo UHD auquel est appliquée une plage dynamique élevée rétrocompatible, HDR, et/ou une fréquence image élevée rétrocompatible, HFR, ou un service vidéo UHD auquel est appliquée une HDR non rétrocompatible et/ou une HFR non rétrocompatible.

15. Appareil de réception de signal de radiodiffusion selon la revendication 14, les informations de type service du service vidéo UHD auquel est appliquée une HDR non rétrocompatible et/ou une HFR non rétrocompatible, étant fixés à 0x20, la SDT comprenant un descripteur de composant, identifiant un flux de composant du service vidéo UHD à l'aide d'un champ de contenu de flux, d'une champ d'extension de contenu de flux et un champ de type de composant, et un flux de composant du service vidéo UHD auquel est appliquée une HDR rétrocompatible et/ou une HFR rétrocompatible, étant identifié par plusieurs descripteurs de composant.
